# EUROPEAN PATENT SPECIFICATION

(11) **EP 4 383 377 B1**
(45) Date of publication and mention of the grant of the patent: **21.10.2026**
(21) Application number: 22940563.4
(22) Date of filing: 05.05.2022
(51) Int. Cl.: H01M 4/66, H01M 10/42, H01M 4/13, H01M 4/62, H01M 10/04, H01M 50/474, H01M 50/486, H01M 4/131, H01M 10/0525, H01M 10/0583, H01M 10/0587, H01M 4/02

(54) **POSITIVE ELECTRODE PLATE, ELECTRODE ASSEMBLY, BATTERY CELL, BATTERY, AND ELECTRICAL DEVICE**
POSITIVELEKTRODENPLATTE, ELEKTRODENANORDNUNG, BATTERIEZELLE, BATTERIE UND ELEKTRISCHE VORRICHTUNG
PLAQUE D'ÉLECTRODE POSITIVE, ENSEMBLE ÉLECTRODE, ÉLÉMENT DE BATTERIE, BATTERIE ET DISPOSITIF ÉLECTRIQUE

(43) Date of publication of application: 12.06.2024
(73) Proprietor: Contemporary Amperex Technology (Hong Kong) Limited, Central, Central And Western District (HK)
(72) Inventor: XIE, Lan, Ningde, Fujian 352100 (CN); LIN, Zhen, Ningde, Fujian 352100 (CN); LIN, Shiliang, Ningde, Fujian 352100 (CN); WU, Xiaohui, Ningde, Fujian 352100 (CN); WANG, Long, Ningde, Fujian 352100 (CN); LI, Wei, Ningde, Fujian 352100 (CN); LI, Zhonghong, Ningde, Fujian 352100 (CN); WU, Kai, Ningde, Fujian 352100 (CN)
(74) Representative: Gong, Jinping
(86) International application number: PCT/CN2022/090988
(87) International publication number: WO 2023/212867

(56) References cited:
- EP-A1- 4 064 405
- EP-A1- 4 310 978
- CN-A- 102 683 739
- CN-A- 109 698 317
- CN-A- 112 886 051
- CN-B- 103 022 408
- CN-U- 216 120 372
- JP-A- 2006 278 182
- US-A1- 2017 092 930

## Description

### Technical Field

The present application relates to the field of battery technology, and in particular, to a positive electrode sheet, an electrode assembly, a battery cell, a battery, and an electrical device.

### Background Art

Energy conservation and emission reduction are the key to sustainable development of the automotive industry. Electric vehicles have become an important part of the sustainable development of the automotive industry due to their advantages in energy conservation and environmental protection. For the electric vehicles, the battery technology is an important factor related to their development.

Lithium precipitation is a common abnormal phenomenon of lithium batteries, and may affect charging efficiency and energy density of lithium ions. When the lithium precipitation is serious, lithium crystals may be formed. The lithium crystals may pierce a separator to cause short circuits and thermal runaway in battery cells, which seriously endanger safety of a battery. In this context, relevant prior art documents are EP4310978A1, EP4064405A1, CN112886051A and CN103022408B.

### Summary

In view of the above problems, the present application provides a positive electrode sheet, an electrode assembly, a battery cell, a battery, and an electrical device, which can reduce or avoid lithium precipitation and improve safety of the battery.

In a first aspect, the present application provides a positive electrode sheet, including: a positive electrode current collector and a positive electrode active material layer, where the positive electrode active material layer is disposed on at least one side of the positive electrode current collector in a thickness direction, and the positive electrode sheet is configured with a straight portion and to-be-bent portions; a thickening layer is disposed on at least one side of the positive electrode current collector of at least some of the to-be-bent portions in the thickness direction, the thickening layer is disposed between the positive electrode current collector and the positive electrode active material layer, the positive electrode active material layer covering a surface of the thickening layer is a first positive electrode active material layer, and the positive electrode active material layer located in the straight portion and connected to the first positive electrode active material layer is a second positive electrode active material layer; and a ratio of a thickness of the first positive electrode active material layer to a thickness of the second positive electrode active material layer is 20-80%.

In the technical solution of the embodiments of the present application, because the thickening layer is disposed on at least one side of the positive electrode current collector of the to-be-bent portions, when the surface of the positive electrode current collector is coated with a positive electrode active material, the coating mass of the positive electrode active material coated on the surface of the thickening layer is reduced, thereby ensuring that the capacity of the positive electrode active material in this region is less than that of a corresponding negative electrode active material, then reducing or avoiding the occurrence of lithium precipitation, and improving the safety and service life of a battery.

In some embodiments, the ratio of the thickness of the first positive electrode active material layer to the thickness of the second positive electrode active material layer is 30-60%. In the positive electrode sheet of the embodiments of the present application, the ratio of the thickness of the first positive electrode active material layer to the thickness of the second positive electrode active material layer cannot be too large or too small, which can ensure an energy density of the battery and reduce or avoid lithium precipitation.

In some embodiments, the ratio of the thickness of the first positive electrode active material layer to the thickness of the second positive electrode active material layer is 45-55%. In the positive electrode sheet of the embodiments of the present application, the ratio of the thickness of the first positive electrode active material layer to the thickness of the second positive electrode active material layer cannot be too large or too small, which can ensure an energy density of the battery and reduce or avoid lithium precipitation.

In some embodiments, a ratio of the thickness of the second positive electrode active material layer to a thickness sum of the first positive electrode active material layer and the thickening layer is 1:(0.9-1.1). In the positive electrode sheet of the embodiments of the present application, the thickness of the second positive electrode active material layer is substantially equal to the thickness sum of the first positive electrode active material layer and the thickening layer, but an error value is also allowed.

In some embodiments, the ratio of the thickness of the second positive electrode active material layer to the thickness sum of the first positive electrode active material layer and the thickening layer is 1:(0.95-1.05). In the positive electrode sheet of the embodiments of the present application, the thickness of the second positive electrode active material layer is substantially equal to the thickness sum of the first positive electrode active material layer and the thickening layer, but an error value is also allowed.

In some embodiments, the positive electrode active material layer is disposed on two sides of the positive electrode current collector in the thickness direction. The positive electrode active material layer is disposed on the two sides of the positive electrode current collector, which is beneficial to increasing the energy density of the battery.

In some embodiments, a plurality of hole regions are distributed in the thickening layer, and the hole region is filled with a positive electrode active material for connecting the positive electrode current collector and the first positive electrode active material layer. The hole region is disposed in the thickening layer, so that a part of the positive electrode active material can pass through the hole region in the coating process and tightly adheres to the positive electrode current collector, thereby strengthening the overall adhesion of the positive electrode active material and ensuring that the positive electrode active material does not shed during manufacturing and long-term use.

In some embodiments, the surface where the thickening layer is bonded to the first positive electrode active material layer is a bonding surface, and a ratio of an area of the plurality of hole regions distributed on the bonding surface to an area of the bonding surface is 20% to 50%. In the positive electrode sheet of the embodiments of the present application, the ratio of the area of the plurality of hole regions distributed on the bonding surface to the area of the bonding surface cannot be too large or too small, which can strengthen the overall adhesion of the positive electrode active material to ensure that the positive electrode active material does not shed during manufacturing and long-term use, and can also ensure that the capacity of the positive electrode active material disposed on the side with the thickening layer is much less than that of the corresponding negative electrode active material, thereby reducing or avoiding the occurrence of lithium precipitation and improving the safety and service life of the battery.

In some embodiments, holes penetrating the thickening layer are distributed in the hole region of the thickening layer, the holes are filled with the positive electrode active material, and the holes have an inner diameter of 100-5000 µm. In the positive electrode sheet of the embodiments of the present application, the inner diameter of the holes cannot be too large or too small, which can not only allow the positive electrode active material to pass through the holes in the coating process, but also can ensure the stability of the thickening layer .

In some embodiments, the thickening layer is made of an insulating material. The thickening layer does not need to have a conductive function, and the insulating material is cheap, readily available, and light and therefore is a good choice for making the thickening layer.

In some embodiments, the material of the thickening layer includes acrylic resin and/or polyolefin resin; the acrylic resin includes any one or more of acrylic acid-methacrylic acid copolymer, acrylic acid-butenoic acid copolymer, acrylic acid-itaconic acid copolymer, acrylic acid-maleic acid copolymer, acrylic acid-methyl methacrylate copolymer, acrylic acid-ethyl methacrylate copolymer, acrylic acid-n-butyl methacrylate copolymer, and acrylic acid-isobutyl methacrylate copolymer; and the polyolefin resin includes any one or more of polypropylene, polyethylene, polybutadiene rubber, ethylene-propylene acetate copolymer, ethylene-propylene copolymer, ethylene-vinyl acetate copolymer, maleic anhydride modified polyolefin, poly(butadiene-acrylonitrile), and styrene-maleic anhydride copolymer. The acrylic resin and/or the polyolefin resin are common insulating materials that do not dissolve in an electrolytic solution.

In some embodiments, the thickening layer is bonded to the positive electrode current collector and the first positive electrode active material layer separately. The thickening layer may be bonded to the positive electrode current collector and the first positive electrode active material layer separately through its viscosity.

In a second aspect, the present application provides an electrode assembly, including: a negative electrode sheet and the foregoing positive electrode sheet, where the positive electrode sheet and the negative electrode sheet are wound or folded to form bent regions and a straight region, and the straight region is connected to the bent regions; and the to-be-bent portions are wound or folded to form bent portions, the bent portions are located in the bent regions, and the straight portion is located in the straight region.

In the technical solution of the embodiments of the present application, the thickening layer is disposed between the positive electrode current collector and the first positive electrode active material layer in some bent regions, and when the surface of the positive electrode current collector is coated with the positive electrode active material, the coating mass of the positive electrode active material coated on the surface of the thickening layer is reduced, thereby ensuring that the capacity of the positive electrode active material in some bent regions is less than that of the corresponding negative electrode active material, then weakening or preventing a lithium de-intercalation reaction of the active material layer of the positive electrode sheet in some bent regions, and improving the safety and service life of the battery.

In some embodiments, the positive electrode sheet and the negative electrode sheet are wound to form a wound structure, the positive electrode current collector of the bent portion has an inner side and an outer side, and the thickening layer is disposed on the inner side of the positive electrode current collector of at least some of the bent portions. For the electrode assembly of the wound structure, the inner side of the positive electrode current collector is larger than an outer side of a corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of at least some bent portions, which can reduce the capacity of the positive electrode active material on the inner side of the positive electrode current collector of the bent portions, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In some embodiments, the positive electrode sheet and the negative electrode sheet are wound to form a wound structure, the positive electrode sheet has a first bent portion on an innermost side, and the thickening layer is disposed on at least one side of the positive electrode current collector of the first bent portion in the thickness direction. The first bent portion on the innermost side of the electrode assembly is a region most prone to a lithium precipitation reaction, and the thickening layer is disposed on at least one side of the positive electrode current collector of the first bent portion to ensure that the capacity of the positive electrode active material in this region is less than that of the corresponding negative electrode active material, thereby weakening or preventing the lithium de-intercalation reaction of the active material layer of the positive electrode sheet in this region, and improving the safety and service life of the battery.

In some embodiments, the positive electrode current collector of the first bent portion is configured with an inner side and an outer side, and the thickening layer is disposed on the inner side of the positive electrode current collector of the first bent portion. For the electrode assembly of the wound structure, the inner side of the positive electrode current collector is larger than the outer side of the corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of the first bent portion, which can reduce the capacity of the positive electrode active material on the inner side of the positive electrode current collector of the first bent portion, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In some embodiments, in a winding direction, the positive electrode sheet has a second bent portion adjacent to the first bent portion, and the thickening layer is disposed on at least one side of the positive electrode current collector of the second bent portion in the thickness direction. The second bent portion on the inner side of the electrode assembly is a second region prone to a lithium precipitation reaction, and the thickening layer is disposed on at least one side of the positive electrode current collector of the second bent portion to ensure that the capacity of the positive electrode active material in this region is less than that of the corresponding negative electrode active material, thereby weakening or preventing the lithium de-intercalation reaction of the active material layer of the positive electrode sheet in this region, improving the safety and service life of the battery, and also ensuring the energy density of the battery.

In some embodiments, the positive electrode current collector of the second bent portion is configured with an inner side and an outer side, and the thickening layer is disposed on the inner side of the positive electrode current collector of the second bent portion. For the electrode assembly of the wound structure, the inner side of the positive electrode current collector is larger than the outer side of the corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of the second bent portion, which can reduce the capacity of the positive electrode active material on the inner side of the positive electrode current collector of the second bent portion, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In some embodiments, in the winding direction, the positive electrode sheet has a third bent portion adjacent to the second bent portion, and the thickening layer is disposed on at least one side of the positive electrode current collector of the third bent portion in the thickness direction. The third bent portion on the inner side of the electrode assembly is a third region prone to a lithium precipitation reaction, and the thickening layer is disposed on at least one side of the positive electrode current collector of the third bent portion to ensure that the capacity of the positive electrode active material in this region is less than that of the corresponding negative electrode active material, thereby weakening or preventing the lithium de-intercalation reaction of the active material layer of the positive electrode sheet in this region, improving the safety and service life of the battery, and also ensuring the energy density of the battery.

In some embodiments, the positive electrode current collector of the third bent portion is configured with an inner side and an outer side, and the thickening layer is disposed on the inner side of the positive electrode current collector of the third bent portion. For the electrode assembly of the wound structure, the inner side of the positive electrode current collector is larger than the outer side of the corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of the third bent portion, which can reduce the capacity of the positive electrode active material on the inner side of the positive electrode current collector of the third bent portion, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In some embodiments, in the winding direction, the positive electrode sheet has a fourth bent portion adjacent to the third bent portion, and the thickening layer is disposed on at least one side of the positive electrode current collector of the fourth bent portion in the thickness direction. The fourth bent portion on the inner side of the electrode assembly is a fourth region prone to a lithium precipitation reaction, and the thickening layer is disposed on at least one side of the positive electrode current collector of the fourth bent portion to ensure that the capacity of the positive electrode active material in this region is less than that of the corresponding negative electrode active material, thereby weakening or preventing the lithium de-intercalation reaction of the active material layer of the positive electrode sheet in this region, improving the safety and service life of the battery, and also ensuring the energy density of the battery.

In some embodiments, the positive electrode current collector of the fourth bent portion is configured with an inner side and an outer side, and the thickening layer is disposed on the inner side of the positive electrode current collector of the fourth bent portion. For the electrode assembly of the wound structure, the inner side of the positive electrode current collector is larger than the outer side of the corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of the fourth bent portion, which can reduce the capacity of the positive electrode active material on the inner side of the positive electrode current collector of the fourth bent portion, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In some embodiments, the positive electrode sheet and the negative electrode sheet are folded to form a laminated structure, the positive electrode sheet has a fifth bent portion that clads the negative electrode sheet, and the thickening layer is disposed on at least one side of the positive electrode current collector of the fifth bent portion in the thickness direction. The fifth bent portion of the laminated structure is a region prone to a lithium precipitation reaction, and the thickening layer is disposed on at least one side of the positive electrode current collector of the fifth bent portion to ensure that the capacity of the positive electrode active material in this region is less than that of the corresponding negative electrode active material, thereby weakening or preventing the lithium de-intercalation reaction of the active material layer of the positive electrode sheet in this region, improving the safety and service life of the battery, and also ensuring the energy density of the battery.

In some embodiments, the positive electrode current collector of the fifth bent portion is configured with an inner side and an outer side, and the thickening layer is disposed on the inner side of the positive electrode current collector of the fifth bent portion. For the electrode assembly of the laminated structure, the inner side of the positive electrode current collector is larger than the outer side of the corresponding negative electrode current collector. In this case, the capacity of the positive electrode active material on the inner side of the positive electrode current collector is greater than that of the corresponding negative electrode active material under normal circumstances, so that a lithium precipitation reaction is very likely to occur. The thickening layer is disposed on the inner side of the positive electrode current collector of the fifth bent portion, which can reduce the capacity of the positive electrode active material on the inner side of the positive electrode current collector of the fifth bent portion, thereby ensuring that the capacity of the positive electrode active material in this region is less than that of the corresponding negative electrode active material, then weakening or preventing the lithium de-intercalation reaction of the active material layer of the positive electrode sheet in some bent regions, and improving the safety and service life of the battery.

In a third aspect, the present application provides a battery cell, including the foregoing electrode assembly.

In a fourth aspect, the present application provides a battery, including the foregoing battery cell.

In a fifth aspect, the present application provides an electrical device, including the foregoing battery, where the battery is used for providing electrical energy.

### Brief Description of Drawings

By reading the detailed description of preferred embodiments below, various other advantages and benefits will become clear to those of ordinary skill in the art. The accompanying drawings are only used to illustrate the preferred embodiments and are not considered as a limitation on the present application. Moreover, in all the drawings, the same reference numerals denote the same components. In the figures:
FIG. 1 is a schematic structural diagram of a vehicle provided in some embodiments of the present application;
FIG. 2 is an exploded view of a battery provided in some embodiments of the present application;
FIG. 3 is an exploded view of a battery cell shown in FIG. 2;
FIG. 4 is a cross-sectional view of a first type of positive electrode sheet in some embodiments of the present application;
FIG. 5 is a schematic structural diagram after a thickening layer is disposed on a positive electrode current collector in some embodiments of the present application;
FIG. 6 is a cross-sectional view of a second type of positive electrode sheet in some embodiments of the present application;
FIG. 7 is a cross-sectional view of a third type of positive electrode sheet in some embodiments of the present application;
FIG. 8 is a schematic diagram of a partial structure in some embodiments of the present application;
FIG. 9 is a schematic structural diagram of a first type of electrode assembly in some embodiments of the present application;
FIG. 10 is a schematic structural diagram of a second type of electrode assembly in some embodiments of the present application;
FIG. 11 is a schematic structural diagram of a third type of electrode assembly in some embodiments of the present application;
FIG. 12 is a schematic diagram of a first type of partial structure of the first type of electrode assembly in some embodiments of the present application;
FIG. 13 is a schematic diagram of a second type of partial structure of the first type of electrode assembly in some embodiments of the present application;
FIG. 14 is a schematic diagram of a third type of partial structure of the first type of electrode assembly in some embodiments of the present application;
FIG. 15 is a schematic diagram of a fourth type of partial structure of the first type of electrode assembly in some embodiments of the present application;
FIG. 16 is a schematic structural diagram of a fourth type of electrode assembly in some embodiments of the present application;
FIG. 17 is a schematic structural diagram of a fifth type of electrode assembly in some embodiments of the present application;
FIG. 18 is a schematic structural diagram of a sixth type of electrode assembly in some embodiments of the present application;
FIG. 19 is a schematic diagram of a partial structure of the second type of electrode assembly in some embodiments of the present application; and
FIG. 20 is a schematic diagram of a partial structure of the third type of electrode assembly in some embodiments of the present application.

The reference numerals in the specific embodiments are as follows:
1000 - vehicle;
100 - battery; 200 - controller; 300 - motor;
10 - box; 11 - first portion; 12 - second portion; 13 - accommodating space;
20 - battery cell; 21 - shell; 22 - electrode assembly; 23 - electrode terminal; 24 - pressure relief structure;
211 - shell body; 212 - cover body; 213 - sealing space;
400 - positive electrode sheet; 401 - straight portion; 402 - to-be-bent portion; 410 - positive electrode current collector; 420 - first positive electrode active material layer; 430 - thickening layer; 431 - hole region; 432 - bonding surface; 440 - second positive electrode active material layer; 451 - first bent portion; 452 - second bent portion; 453 - third bent portion; 454 - fourth bent portion;
500 - electrode assembly; 501 - straight region; 502 - bent region; 600 - negative electrode sheet; 700 - separator.

### Detailed Description of Embodiments

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the specification and claims of the present application, the accompanying drawings, and any variations thereof, are intended to cover non-exclusive inclusion.

In the description of the embodiments of the present application, the technical terms "first", "second", and the like are only used to distinguish different objects and cannot be understood as indicating or implying relative importance or implying a quantity, specific order, or primary and secondary relationship of the indicated technical features. In the description of the embodiments of the present application, the meaning of "a plurality of" is two or more, unless otherwise specifically defined.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "and/or" in the present application is merely an association relationship for describing associated objects, and represents that three relationships may exist. For example, A and/or B may represent the following three cases: A exists alone, both A and B exist, and B exists alone. In addition, the character "/" herein generally indicates an "or" relationship between successive associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the terms "mounted", "connected", "connection", "fixed", and the like should be understood in a broad sense, for example, "connection" may be a fixed connection, a detachable connection, an integrated connection, a mechanical connection, an electrical connection, a direct connection, an indirect connection via an intermediate medium, communication between interiors of two elements, or interaction between two elements. Those of ordinary skill in the art may appreciate the specific meanings of the foregoing terms in the embodiments of the present application according to specific circumstances.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The inventor of the present application noticed, when a lithium-ion battery is charged, lithium ions are de-intercalated from a positive electrode and intercalated into a negative electrode; and during discharging, lithium ions are de-intercalated from the negative electrode and intercalated into the positive electrode. When the lithium-ion battery is charged, some abnormalities may occur to precipitate lithium, such as insufficient space for lithium intercalation in the negative electrode, excessive resistance to intercalation of lithium ions into the negative electrode, or rapid de-intercalation of lithium ions from the positive electrode. The de-intercalated lithium ions cannot be equally intercalated into a negative electrode active material layer of a negative electrode sheet, and the lithium ions that cannot be intercalated into the negative electrode sheet can only obtain electrons on a surface of the negative electrode to form a silver white metallic lithium element, which is a phenomenon of lithium precipitation. The lithium precipitation not only degrades performance of the lithium-ion battery and significantly shortens cycle life, but also limits fast charging capacity of the lithium-ion battery. Meanwhile, when the lithium precipitation occurs in the lithium-ion battery, the precipitated lithium metal is very active and may react with an electrolyte to decrease initial temperature of heat generation by the battery and increase a heat generation rate, which seriously endangers the safety of the battery. In addition, in case of serious lithium precipitation, the de-intercalated lithium ions form lithium crystals on the surface of the negative electrode sheet, and the lithium crystals may pierce a separator to cause a short circuit and thermal runaway between the adjacent positive electrode sheet and negative electrode sheet.

Upon research, the applicant found that the lithium precipitation often occurs in a bent region of an electrode assembly. In a process of winding or folding the positive and negative electrode sheets, a negative electrode active material of the negative electrode sheet in the bent region is prone to shedding. As a result, lithium intercalation sites of a negative electrode active material layer of the negative electrode sheet are less than lithium ions that can be provided by a positive electrode active material layer of the adjacent positive electrode sheet, and the lithium precipitation is prone to occur when the lithium-ion battery is charged.

In order to alleviate the problem of lithium precipitation, the applicant attempted to dispose a barrier layer between a positive electrode current collector and the positive electrode active material layer in the bent region, where the barrier layer is used for blocking electron transport between the positive electrode current collector and the positive electrode active material layer, thereby weakening or preventing a lithium de-intercalation reaction of the positive electrode active material layer in a bent portion to expect that lithium ions are not de-intercalated or a small quantity of lithium ions are de-intercalated from the positive electrode active material layer. However, the inventor found by further research that the barrier layer cannot prevent the de-intercalation of lithium ions from the positive electrode active material on its surface, as positive electrode active material layers are connected in parallel and are generally an equipotential body. Electrons between the positive electrode active material layers may be transported through a binder or conductive agent around, accompanied by the de-intercalation of lithium ions. Therefore, the material of the barrier layer has a limited impact on alleviating the lithium precipitation.

The applicant accidentally found that the lithium precipitation is significantly alleviated when the thickness of the barrier layer reaches a specific range. Based on the above considerations, in order to alleviate excessive de-intercalation of lithium ions from the positive electrode active material layer in the bent region, the inventor designed a positive electrode sheet after in-depth research, including: a positive electrode current collector and a positive electrode active material layer, where the positive electrode active material layer is disposed on at least one side of the positive electrode current collector in a thickness direction, and the positive electrode sheet is configured with a straight portion and to-be-bent portions; a thickening layer is disposed on at least one side of the positive electrode current collector of at least some of the to-be-bent portions in the thickness direction, the thickening layer is disposed between the positive electrode current collector and the positive electrode active material layer, the positive electrode active material layer covering a surface of the thickening layer is a first positive electrode active material layer, and the positive electrode active material layer located in the straight portion and connected to the first positive electrode active material layer is a second positive electrode active material layer; and a ratio of a thickness of the first positive electrode active material layer to a thickness of the second positive electrode active material layer is 20-80%.

This positive electrode sheet is used to make an electrode assembly. Because the thickening layer is disposed on at least one side of the positive electrode current collector of the to-be-bent portions, when a surface of the positive electrode current collector is coated with a positive electrode active material, the coating mass of the positive electrode active material coated on the surface of the thickening layer is reduced, thereby ensuring that the capacity of the positive electrode active material in this region is less than that of a corresponding negative electrode active material, then reducing or avoiding the occurrence of lithium precipitation, and improving the safety and service life of a battery.

Even if the negative electrode active material in the bent region of the electrode assembly sheds, because the capacity of the positive electrode active material in this region is less than that of the corresponding negative electrode active material, the negative electrode active material layer of the negative electrode sheet can still provide sufficient lithium intercalation sites for the positive electrode active material layer of the adjacent positive electrode sheet, thereby reducing or avoiding the occurrence of lithium precipitation.

The battery mentioned in the embodiments of the present application refers to a single physical module that includes one or more battery cells to provide higher voltage and capacity. The battery generally includes a battery box for packaging one or more battery cells, and the battery box may prevent liquid or other foreign matters from affecting charging or discharging of the battery cells.

The battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells, and soft packaged battery cells.

The battery cell includes an electrode assembly and an electrolytic solution, and the electrode assembly is composed of a positive electrode sheet, a negative electrode sheet, and a separator. The battery cell mainly relies on movement of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and the positive electrode active material may be lithium cobalate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative tab. A material of the negative electrode current collector may be copper, and the negative electrode active material may be carbon, silicon, or the like. In order to ensure that no fusing occurs when high current passes through, there is a plurality of positive tabs laminated together, and there is a plurality of negative tabs laminated together. A material of the separator may be polypropylene (PP), polyethylene (PE), or the like. Moreover, the electrode assembly may be of a wound structure or a laminated structure, and the embodiments of the present application are not limited thereto.

The battery cell further includes a current collecting component, which is used for electrically connecting a tab and an electrode terminal of the battery cell to transport electrical energy from the electrode assembly to the electrode terminal, and then to the outside of the battery cell via the electrode terminal; and the plurality of battery cells are electrically connected through the current collecting component to achieve series, parallel, or series-parallel connection of the plurality of battery cells.

The battery further includes a sampling terminal and a battery management system, and the sampling terminal is connected to the current collecting component to collect information of the battery cell, such as voltage or temperature. The sampling terminal transmits the collected information of the battery cell to the battery management system. When detecting that the information of the battery cell exceeds a normal range, the battery management system limits output power of the battery to achieve safety protection.

It may be understood that the applicable electrical device using the battery described in the embodiments of the present application may be in various forms, such as a mobile phone, a portable device, a notebook computer, a scooter, an electric vehicle, a ship, a spacecraft, an electric toy, or an electric tool. For example, the spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer.

The battery cell and the battery described in the embodiments of the present application are not only applicable to the electrical devices described above, but also applicable to all electrical devices using the battery cell and the battery. However, for brief description, the following embodiments are all described by an example of an electric vehicle.

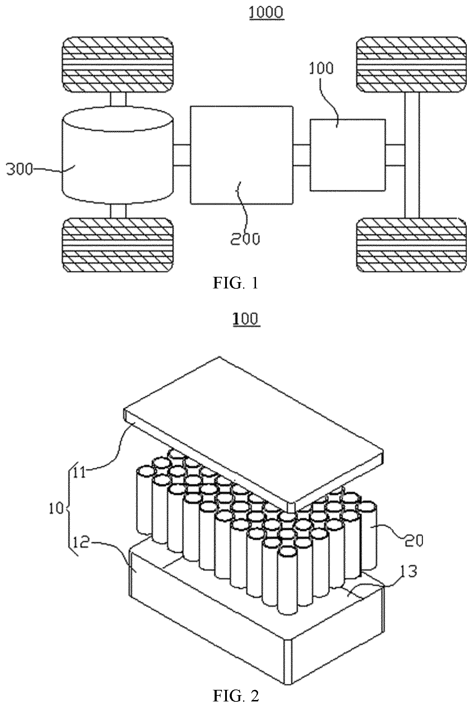

Refer to FIG. 1. FIG. 1 is a schematic structural diagram of a vehicle 1000 provided in some embodiments of the present application. The vehicle 1000 may be a fuel-powered vehicle, a gaspowered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 provided in some embodiments of the present application. The battery 100 may include a box 10 and battery cells 20, where the battery cells 20 are accommodated in the box 10. The box 10 is used for accommodating the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine an accommodating space 13 for accommodating the battery cells 20. The second portion 12 may be of a hollow structure with an opening at one end, the first portion 11 is of a plate-like structure, and the first portion 11 covers an open side of the second portion 12 to form the box 10 with the accommodating space 13; or each of the first portion 11 and the second portion 12 may be of a hollow structure with an open side, and the open side of the first portion 11 covers the open side of the second portion 12 to form the box 10 with the accommodating space 13. Of course, the first portion 11 and the second portion 12 may be in various shapes, such as cylindrical or cuboid.

There may be one or more battery cells 20 in the battery 100. If there is a plurality of battery cells 20, the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Alternatively, the plurality of battery cells 20 may first be connected in series, in parallel, or in series and parallel to form a battery module, and then a plurality of battery modules may be connected in series, in parallel, or in series and parallel to form a whole accommodated in the box 10. The battery 100 may further include other structures, for example, the plurality of battery cells 20 may be electrically connected through a current collecting component to implement the parallel, series, or series-parallel connection of the plurality of battery cells 20.

Each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes.

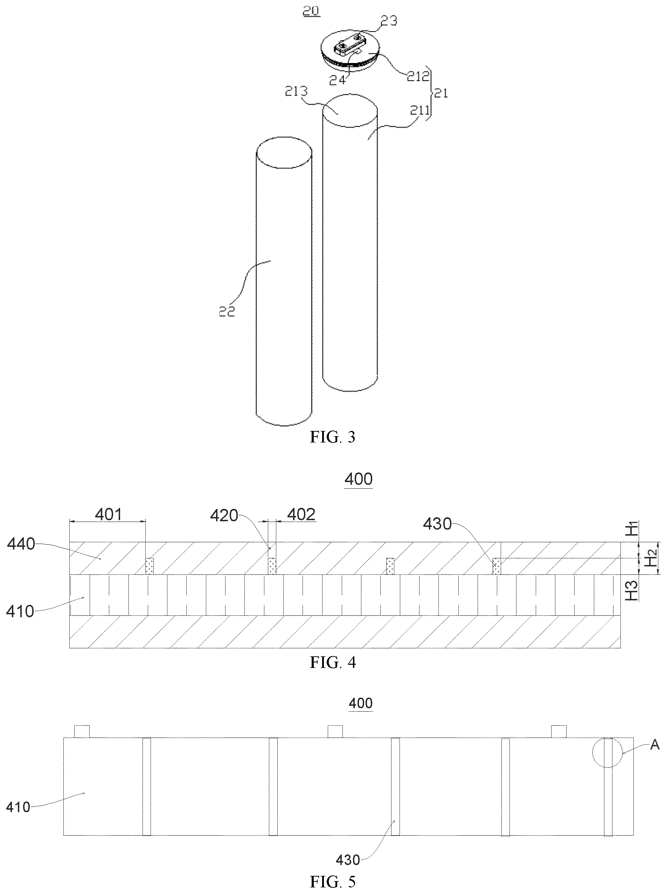

Refer to FIG. 3. FIG. 3 is an exploded view of the battery cell 20 shown in FIG. 2. The battery cell 20 refers to a minimum unit that constitutes the battery 100. As shown in FIG. 3, the battery cell 20 may include a shell 21 and an electrode assembly 22, where the electrode assembly 22 is accommodated within the shell 21. In some embodiments, the shell 21 may also be used for accommodating an electrolyte, such as an electrolytic solution. The shell 21 may be in various structural forms.

The shell 21 may include a shell body 211 and a cover body 212.

The shell body 211 is a component fitting the cover body 212 to form an internal sealing space 213 for the battery cell 20, where the formed sealing space 213 may be used for accommodating the electrode assembly 22, the electrolytic solution, and other components. The shell body 211 and the cover body 212 may be independent components, the shell may be provided with an opening, and the cover body 212 covers the opening to form an internal environment of the battery cell 20. Unlimitedly, the cover body 212 and the shell body 211 may be integrated. Specifically, the cover body 212 and the shell body 211 may form a common connection surface before other components are put into the shell. When the interior of the shell body 211 is required to be encapsulated, the cover body 212 covers the shell body 211. The shell body 211 may be in various shapes and sizes, such as cuboid, cylinder, or hexagonal prism. Specifically, the shape of the shell body 211 may be determined according to a specific shape and size of the electrode assembly 22. A material of the shell body 211 may be various, such as copper, iron, aluminum, stainless steel, aluminum alloy, or plastic, and is not specially limited in the embodiments of the present application.

The cover body 212 refers to a component that covers the opening of the shell body 211 to isolate the internal environment of the battery cell 20 from an external environment. Unlimitedly, the shape of the cover body 212 may adapt to that of the shell body 211 to fit the shell body 211. In some embodiments, the cover body 212 may be made of a material with certain hardness and strength (such as aluminum alloy). In this case, the cover body 212 is less prone to deformation during extrusion and deformation, so that the battery cell 20 can have higher structural strength and its safety performance can be improved. The material of the cover body 212 may alternatively be others, such as copper, iron, aluminum, stainless steel, aluminum alloy, or plastic, and is not specially limited in the embodiments of the present application. In some embodiments, an insulating member may further be disposed on an inner side of the cover body 212, and the insulating member may be used for isolating electrical connection components inside the shell body 211 from the cover body 212 to reduce the risk of short circuits. For example, the insulating member may be made of plastic, rubber, or the like.

Functional components such as an electrode terminal 23 may be disposed on the cover body 212. The electrode terminal 23 is mounted on the cover body 212. The electrode terminal 23 is electrically connected to the electrode assembly 22 to output electrical energy generated by the battery cell 20. For example, the electrode terminal 23 may be electrically connected to the electrode assembly 22 through an adapter (not shown).

The battery cell 20 may further include a pressure relief structure 24, and the pressure relief structure 24 is used for releasing pressure inside the battery cell 20 when the internal pressure or temperature of the battery cell 20 reaches a predetermined value. For example, the pressure relief structure 24 may be a component such as an explosion-proof valve, a rupture disc, a gas valve, a pressure relief valve, or a safety valve.

When the battery cell 20 is assembled, the electrode assembly 22 is first put into the shell body 211, the shell body 211 is filled with an electrolyte, and then the cover body 212 is closed to the opening of the shell body 211.

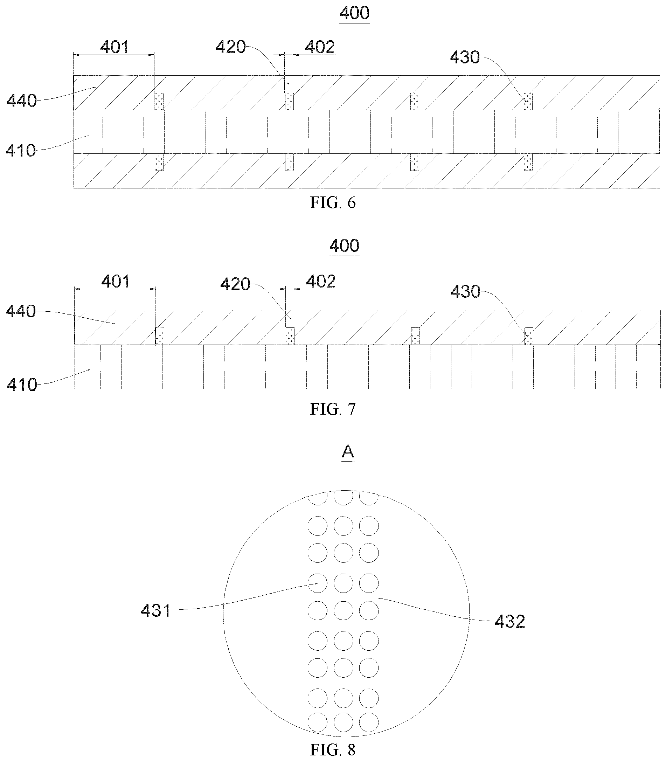

According to some embodiments of the present application, refer to FIGs. 4-7, where FIG. 4 is a cross-sectional view of a first type of positive electrode sheet 400 in some embodiments of the present application, FIG. 5 is a schematic structural diagram after a thickening layer 430 is disposed on a positive electrode current collector 410 in some embodiments of the present application, FIG. 6 is a cross-sectional view of a second type of positive electrode sheet 400 in some embodiments of the present application, and FIG. 7 is a cross-sectional view of a third type of positive electrode sheet 400 in some embodiments of the present application.

The present application provides a positive electrode sheet 400, including: a positive electrode current collector 410 and a positive electrode active material layer, where the positive electrode active material layer is disposed on at least one side of the positive electrode current collector 410 in a thickness direction, and the positive electrode sheet 400 is configured with a straight portion 401 and to-be-bent portions 402; a thickening layer 430 is disposed on at least one side of the positive electrode current collector 410 of at least some of the to-be-bent portions 402 in the thickness direction, the thickening layer 430 is disposed between the positive electrode current collector 410 and the positive electrode active material layer, the positive electrode active material layer covering a surface of the thickening layer 430 is a first positive electrode active material layer 420, and the positive electrode active material layer located in the straight portion 401 and connected to the first positive electrode active material layer 420 is a second positive electrode active material layer 440; and a ratio of a thickness (H₁) of the first positive electrode active material layer 420 to a thickness (H₂) of the second positive electrode active material layer 440 is 20-80%.

The straight portion 401 is a portion of the positive electrode sheet 400 that forms a straight region 501 after winding or bending.

The to-be-bent portion 402 is a portion of the positive electrode sheet 400 that forms a bent region 502 after winding or bending.

The thickening layer 430 is of a layered structure that is disposed on at least one side of the positive electrode current collector 410 and cannot release an active material.

In a process of manufacturing the positive electrode sheet 400, the thickening layer 430 is first disposed on a surface of the positive electrode current collector 410, which is then coated with a positive electrode active material slurry. Because the thickening layer 430 occupies some space, when the positive electrode active material slurry is coated, the positive electrode active material slurry on the surface of the thickening layer 430 is significantly less than the positive electrode active material slurry on the surface without the thickening layer 430. Therefore, the thickness of the first positive electrode active material layer 420 is significantly less than that of the second positive electrode active material layer 440.

As an example, the positive electrode active material layer may be disposed on both sides or only one side of the positive electrode current collector 410 in the thickness direction.

With reference to FIG. 5, in some embodiments of the present application, the positive electrode active material layer is disposed on both sides of the positive electrode current collector 410 in the thickness direction, and the thickening layer 430 is disposed on one side of the positive electrode current collector 410 of at least some of the to-be-bent portions 402 in the thickness direction.

With reference to FIG. 6, in some embodiments of the present application, the positive electrode active material layer is disposed on both sides of the positive electrode current collector 410 in the thickness direction, and the thickening layer 430 is disposed on both sides of the positive electrode current collector 410 of at least some of the to-be-bent portions 402 in the thickness direction.

With reference to FIG. 7, in some embodiments of the present application, the positive electrode active material layer is disposed on one side of the positive electrode current collector 410 in the thickness direction, and the thickening layer 430 is disposed on one side of the positive electrode current collector 410 of at least some of the to-be-bent portions 402 in the thickness direction.

As an example, ions released by the positive electrode active material are lithium ions.

As an example, the ratio of the thickness of the first positive electrode active material layer 420 to the thickness of the second positive electrode active material layer 440 may be 20%, 25%, 30%, 35%, 40%, 45%, 50%, 55%, 60%, 65%, 70%, 75%, or 80%.

Because the thickening layer 430 is disposed on at least one side of the positive electrode current collector 410 of the to-be-bent portions 402 in some embodiments of the present application, when the surface of the positive electrode current collector 410 is coated with the positive electrode active material, the coating mass of the positive electrode active material coated on the surface of the thickening layer 430 is reduced, thereby ensuring that the capacity of the positive electrode active material in this region is less than that of a corresponding negative electrode active material, then reducing or avoiding the occurrence of lithium precipitation, and improving the safety and service life of a battery.

According to some embodiments of the present application, optionally, the ratio of the thickness of the first positive electrode active material layer 420 to the thickness of the second positive electrode active material layer 440 is 30-60%.

In the positive electrode sheet 400 of the embodiments of the present application, the ratio of the thickness of the first positive electrode active material layer 420 to the thickness of the second positive electrode active material layer 440 cannot be too large or too small, which can ensure an energy density of the battery and reduce or avoid lithium precipitation.

According to some embodiments of the present application, optionally, the ratio of the thickness of the first positive electrode active material layer 420 to the thickness of the second positive electrode active material layer 440 is 45-55%.

In the positive electrode sheet 400 of the embodiments of the present application, the ratio of the thickness of the first positive electrode active material layer 420 to the thickness of the second positive electrode active material layer 440 cannot be too large or too small, which can ensure an energy density of the battery and reduce or avoid lithium precipitation.

Optionally, the ratio of the thickness of the first positive electrode active material layer 420 to the thickness of the second positive electrode active material layer 440 is 50%.

According to some embodiments of the present application, optionally, a ratio of the thickness of the second positive electrode active material layer 440 to a thickness sum (H₃) of the first positive electrode active material layer 420 and the thickening layer 430 is 1:(0.9-1.1).

As an example, the ratio of the thickness of the second positive electrode active material layer 440 to the thickness sum of the first positive electrode active material layer 420 and the thickening layer 430 may be 1:0.9, 1:0.95, 1:1, 1:1.05, or 1:1.1.

In the positive electrode sheet 400 of the embodiments of the present application, the thickness of the second positive electrode active material layer 440 is substantially equal to the thickness sum of the first positive electrode active material layer 420 and the thickening layer 430, but an error value is also allowed.

According to some embodiments of the present application, optionally, the ratio of the thickness of the second positive electrode active material layer 440 to the thickness sum of the first positive electrode active material layer 420 and the thickening layer 430 is 1:(0.95-1.05).

In the positive electrode sheet 400 of the embodiments of the present application, the thickness of the second positive electrode active material layer 440 is substantially equal to the thickness sum of the first positive electrode active material layer 420 and the thickening layer 430, but an error value is also allowed.

Optionally, the ratio of the thickness of the second positive electrode active material layer 440 to the thickness sum of the first positive electrode active material layer 420 and the thickening layer 430 is 1:1.

According to some embodiments of the present application, optionally, the positive electrode active material layer is disposed on both sides of the positive electrode current collector 410 in the thickness direction.

The positive electrode active material layer is disposed on the two sides of the positive electrode current collector 410, which is beneficial to increasing the energy density of the battery.

According to some embodiments of the present application, optionally, refer to FIG. 8, where FIG. 8 is a schematic diagram of a partial structure according to some embodiments of the present application. A plurality of hole regions 431 are distributed in the thickening layer 430, and the hole region 431 is filled with a positive electrode active material for connecting the positive electrode current collector 410 and the first positive electrode active material layer 420.

The hole region 431 is a region formed with holes on the surface of the thickening layer 430, and the hole region 431 can allow the positive electrode active material to pass through and contact the positive electrode current collector 410.

If the viscosity of the thickening layer 430 is low and there are no holes in the thickening layer 430, the positive electrode active material coated on the surface of the thickening layer 430 is prone to shedding, which easily causes excessive positive electrode active material in partial regions of other positions. In addition, the shedding positive electrode active material may directly pierce a separator 700, which causes a short circuit in the battery cell and may also cause lithium precipitation in the negative electrode of the relative position to cause safety hazards.

The hole region 431 is disposed in the thickening layer 430 in some embodiments of the present application, so that a part of the positive electrode active material can pass through the hole region 431 in the coating process and tightly adheres to the positive electrode current collector 410, thereby strengthening the overall adhesion of the positive electrode active material and ensuring that the positive electrode active material does not shed during manufacturing and long-term use.

Optionally, the plurality of hole regions 431 are distributed in an array.

According to some embodiments of the present application, optionally, the surface where the thickening layer 430 is bonded to the first positive electrode active material layer 420 is a bonding surface 432, and a ratio of an area of the plurality of hole regions 431 distributed on the bonding surface 432 to an area of the bonding surface 432 is 20% to 50%.

The bonding surface 432 is an outer surface of the thickening layer 430 in its thickness direction, and its inner surface is used for bonding the positive electrode current collector 410.

The area of the plurality of hole regions 431 is an area of holes disposed in the bonding surface 432.

As an example, the ratio of the area of the plurality of hole regions 431 distributed on the bonding surface 432 to the area of the bonding surface 432 may be 20%, 25%, 30%, 35%, 40%, 45%, or 50%.

In the positive electrode sheet 400 of the embodiments of the present application, the ratio of the area of the plurality of hole regions 431 distributed on the bonding surface 432 to the area of the bonding surface 432 cannot be too large or too small, which can strengthen the overall adhesion of the positive electrode active material to ensure that the positive electrode active material does not shed during manufacturing and long-term use, and can also ensure that the capacity of the positive electrode active material disposed on the side with the thickening layer 430 is much less than that of the corresponding negative electrode active material, thereby reducing or avoiding the occurrence of lithium precipitation and improving the safety and service life of the battery.

According to some embodiments of the present application, optionally, holes penetrating the thickening layer 430 are distributed in the hole region 431 of the thickening layer 430, the holes are filled with the positive electrode active material, and the holes have an inner diameter of 100-5000 µm.

A shape of the holes may be cylindrical, cuboid, cubic, or in other shapes, and is not limited by the embodiments of the present application.

As an example, the inner diameter of the holes may be 100 µm, 200 µm, 500 µm, 800 µm, 1000 µm, 1500 µm, 2000 µm, 2500 µm, 3000 µm, 3500 µm, 4000 µm, 4500 µm, or 5000 µm.

The inner diameters of a plurality of holes in the plurality of hole regions 431 may be the same or different, for example, the inner diameters of the plurality of holes are all 1000 µm; or the inner diameters of some holes are 500 µm, and the inner diameters of some holes are 2000 µm. The embodiments of the present application are not limited to this.

In the positive electrode sheet 400 of the embodiments of the present application, the inner diameter of the holes cannot be too large or too small, which can not only allow the positive electrode active material to pass through the holes in the coating process, but also can ensure the stability of the thickening layer 430.

According to some embodiments of the present application, optionally, the thickening layer 430 is made of an insulating material.

The thickening layer 430 does not need to have a conductive function, and the insulating material is cheap, readily available, and light and therefore is a good choice for making the thickening layer 430.

According to some embodiments of the present application, optionally, the material of the thickening layer 430 includes acrylic resin and/or polyolefin resin; the acrylic resin includes any one or more of acrylic acid-methacrylic acid copolymer, acrylic acid-butenoic acid copolymer, acrylic acid-itaconic acid copolymer, acrylic acid-maleic acid copolymer, acrylic acid-methyl methacrylate copolymer, acrylic acid-ethyl methacrylate copolymer, acrylic acid-n-butyl methacrylate copolymer, and acrylic acid-isobutyl methacrylate copolymer; and the polyolefin resin includes any one or more of polypropylene, polyethylene, polybutadiene rubber, ethylene-propylene acetate copolymer, ethylene-propylene copolymer, ethylene-vinyl acetate copolymer, maleic anhydride modified polyolefin, poly(butadiene-acrylonitrile), and styrene-maleic anhydride copolymer.

The acrylic resin and/or the polyolefin resin are common insulating materials that do not dissolve in an electrolytic solution.

According to some embodiments of the present application, optionally, the thickening layer 430 is bonded to the positive electrode current collector 410 and the first positive electrode active material layer 420 separately.

The thickening layer 430 may be bonded to the positive electrode current collector 410 and the first positive electrode active material layer 420 separately through its viscosity.

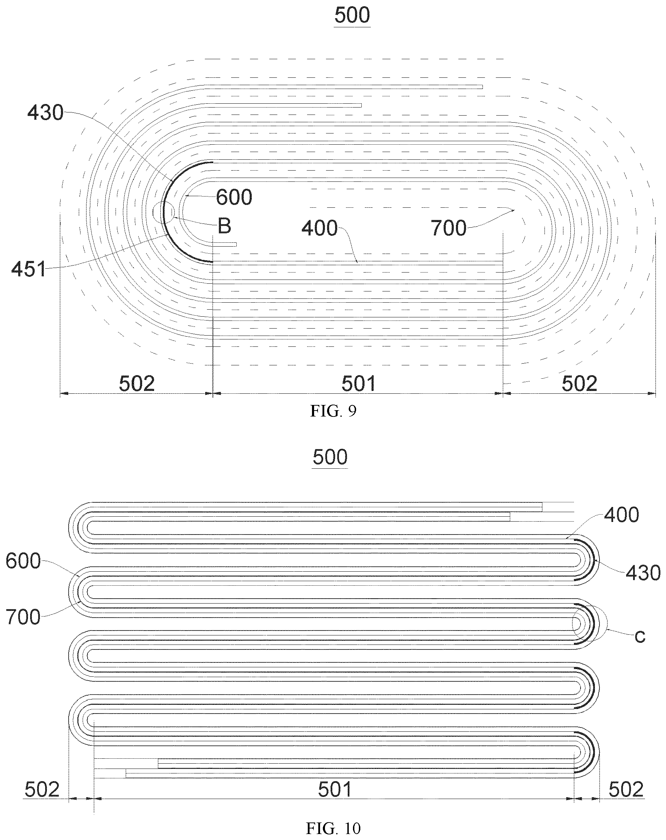

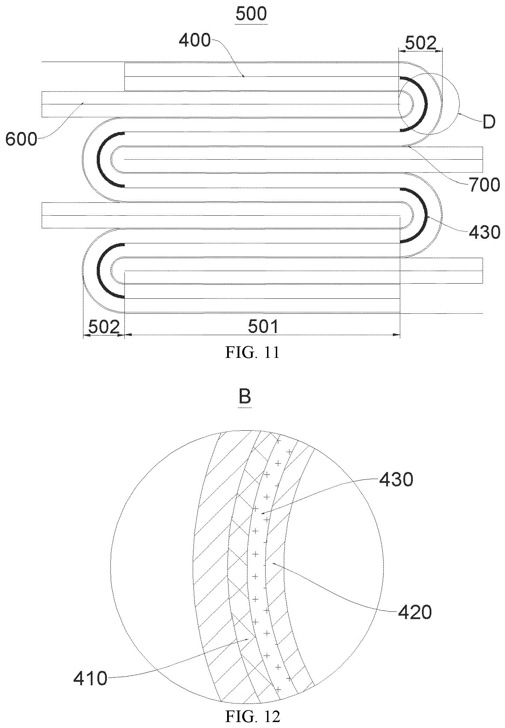

According to some embodiments of the present application, refer to FIGs. 9-11, where FIG. 9 is a schematic structural diagram of a first type of electrode assembly 500 in some embodiments of the present application, FIG. 10 is a schematic structural diagram of a second type of electrode assembly 500 in some embodiments of the present application, and FIG. 11 is a schematic structural diagram of a third type of electrode assembly 500 in some embodiments of the present application.

The present application provides an electrode assembly 500, including: a negative electrode sheet 600 and the foregoing positive electrode sheet 400, where the positive electrode sheet 400 and the negative electrode sheet 600 are wound or folded to form bent regions 502 and a straight region 501, and the straight region 501 is connected to the bent regions 502; and the to-be-bent portions 402 are wound or folded to form bent portions, the bent portions are located in the bent regions 502 and the straight portion 401 is located in the straight region 501.

With reference to FIG. 9, the positive electrode sheet 400, the negative electrode sheet 600, and the separator 700 are wound to form the electrode assembly 500 with a wound structure, the straight region 501 is in the middle of the electrode assembly 500, and the bent regions 502 are at two ends of the straight region 501 separately. The closer the positive electrode sheet 400 and the negative electrode sheet located in the bent region 502 are to the center of the wound structure, the larger the curvature of a curve formed after winding.

With reference to FIG. 10, the positive electrode sheet 400, the negative electrode sheet 600, and the separator 700 are folded to form the electrode assembly 500 of a laminated structure, the straight region 501 is in the middle of the electrode assembly 500, and a plurality of bent regions 502 are at two ends of the straight region 501 separately. Each bent region 502 includes electrode sheets located on inner and outer sides. Each curve formed by folding the positive electrode sheet 400 and the negative electrode sheet 600 on the inner side has the same curvature, and each curve formed by folding the positive electrode sheet 400 and the negative electrode sheet 600 on the outer side in the bent region 502 has the same curvature.

With reference to FIG. 11, the positive electrode sheet 400 and the separator 700 are folded to form a plurality of insertion slots, a plurality of negative electrode sheets 600 are inserted into the insertion slots in one-to-one correspondence to form the electrode assembly 500 of a laminated structure, the straight region 501 is in the middle of the electrode assembly 500, and a plurality of bent regions 502 are at two ends of the straight region 501 separately. Each bent region 502 includes a negative electrode sheet 600 on the inner side and a positive electrode sheet 400 on the outer side, and each curve formed by folding the positive electrode sheet 400 on the outer side in the bent region 502 has the same curvature.

In the technical solution of the embodiments of the present application, the thickening layer 430 is disposed between the positive electrode current collector 410 and the first positive electrode active material layer 420 in some bent regions 502, and when the surface of the positive electrode current collector 410 is coated with the positive electrode active material, the coating mass of the positive electrode active material coated on the surface of the thickening layer 430 is reduced, thereby ensuring that the capacity of the positive electrode active material in some bent regions 502 is less than that of the corresponding negative electrode active material, then weakening or preventing a lithium de-intercalation reaction of the active material layer of the positive electrode sheet 400 in some bent regions 502, and improving the safety and service life of the battery.

According to some embodiments of the present application, optionally, the positive electrode sheet 400 and the negative electrode sheet 600 are wound to form a wound structure, the positive electrode current collector 410 of the bent portion has an inner side and an outer side, and the thickening layer 430 is disposed on the inner side of the positive electrode current collector 410 of at least some of the bent portions.

For the electrode assembly 500 of the wound structure, the inner side of the positive electrode current collector 410 is larger than an outer side of a corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of at least some bent portions, which can reduce the capacity of the positive electrode active material on the inner side of the positive electrode current collector 410 of the bent portions, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

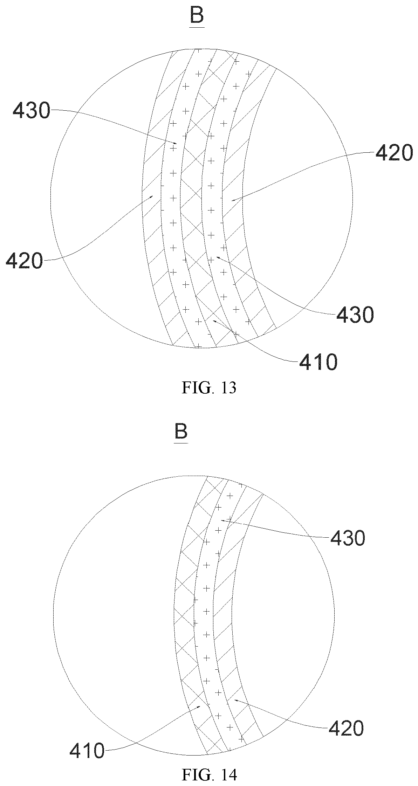

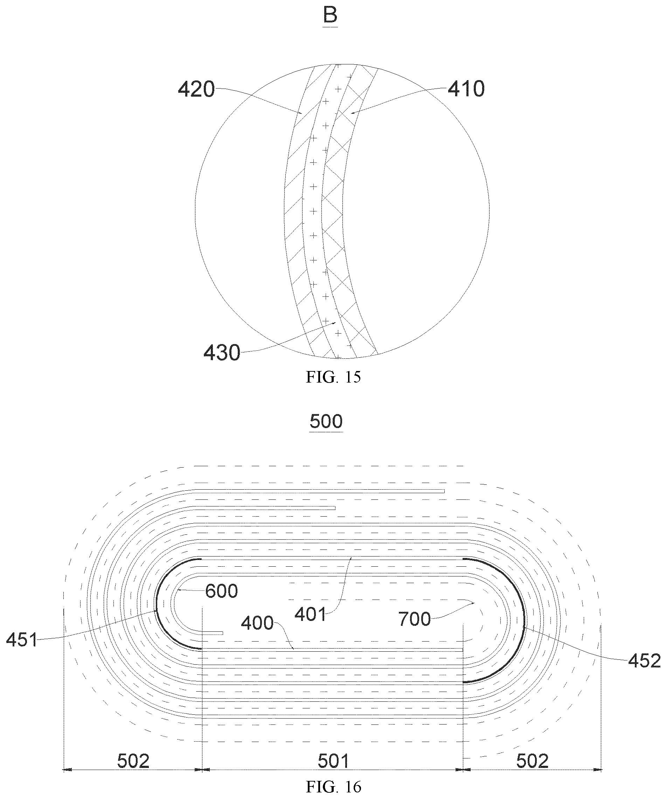

According to some embodiments of the present application, optionally, refer to FIGs. 9 and 12-15, where FIG. 12 is a schematic diagram of a first type of partial structure of the first type of electrode assembly 500 in some embodiments of the present application, FIG. 13 is a schematic diagram of a second type of partial structure of the first type of electrode assembly 500 in some embodiments of the present application, FIG. 14 is a schematic diagram of a third type of partial structure of the first type of electrode assembly 500 in some embodiments of the present application, and FIG. 15 is a schematic diagram of a fourth type of partial structure of the first type of electrode assembly 500 in some embodiments of the present application. The positive electrode sheet 400 and the negative electrode sheet 600 are wound to form a wound structure, the positive electrode sheet 400 has a first bent portion 451 on an innermost side, and the thickening layer 430 is disposed on at least one side of the positive electrode current collector 410 of the first bent portion 451 in the thickness direction.

The first bent portion 451 has a largest bending curvature in the positive electrode sheet 400.

With reference to FIG. 12, the first bent portion 451 includes the positive electrode current collector 410, the second positive electrode active material layer 440 on the outer side of the positive electrode current collector 410, the thickening layer 430 on the inner side of the positive electrode current collector 410, and the first positive electrode active material layer 420.

With reference to FIG. 13, the first bent portion 451 includes the positive electrode current collector 410, the thickening layer 430 on two sides of the positive electrode current collector 410, and the first positive electrode active material layer 420.

With reference to FIG. 14, the first bent portion 451 includes the positive electrode current collector 410, the thickening layer 430 on the inner side of the positive electrode current collector 410, and the first positive electrode active material layer 420.

With reference to FIG. 15, the first bent portion 451 includes the positive electrode current collector 410, the thickening layer 430 on the outer side of the positive electrode current collector 410, and the first positive electrode active material layer 420.

The first bent portion 451 on the innermost side of the electrode assembly 500 is a region most prone to a lithium precipitation reaction, and the thickening layer 430 is disposed on at least one side of the positive electrode current collector 410 of the first bent portion 451 to ensure that the capacity of the positive electrode active material in this region is less than that of the corresponding negative electrode active material, thereby weakening or preventing the lithium de-intercalation reaction of the active material layer of the positive electrode sheet 400 in this region, and improving the safety and service life of the battery.

According to some embodiments of the present application, optionally, as shown in the figures, the positive electrode current collector 410 of the first bent portion 451 is configured with an inner side and an outer side, and the thickening layer 430 is disposed on the inner side of the positive electrode current collector 410 of the first bent portion 451.

The inner side is a side facing the center of the wound structure.

The outer side is a side opposite to the inner side.

For the electrode assembly 500 of the wound structure, the inner side of the positive electrode current collector 410 is larger than the outer side of the corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of the first bent portion 451, which can reduce the capacity of the positive electrode active material on the inner side of the positive electrode current collector 410 of the first bent portion 451, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

According to some embodiments of the present application, optionally, refer to FIG. 16, where FIG. 16 is a schematic structural diagram of a fourth type of electrode assembly 500 in some embodiments of the present application. In a winding direction, the positive electrode sheet 400 has a second bent portion 452 adjacent to the first bent portion 451, and the thickening layer 430 is disposed on at least one side of the positive electrode current collector 410 of the second bent portion 452 in the thickness direction.

The second bent portion 452 has the second largest bending curvature in the positive electrode sheet 400, and a straight portion 401 is disposed between the second bent portion 452 and the first bent portion 451.

As an example, the second bent portion 452 may include the positive electrode current collector 410, the second positive electrode active material layer 440 on the outer side of the positive electrode current collector 410, the thickening layer 430 on the inner side of the positive electrode current collector 410, and the first positive electrode active material layer 420; or the second bent portion 452 may include the positive electrode current collector 410, the thickening layer 430 on two sides of the positive electrode current collector 410, and the first positive electrode active material layer 420; or the second bent portion 452 may include the positive electrode current collector 410, the thickening layer 430 on the inner side of the positive electrode current collector 410, and the first positive electrode active material layer 420; or the second bent portion 452 may include the positive electrode current collector 410, the thickening layer 430 on the outer side of the positive electrode current collector 410, and the first positive electrode active material layer 420.

The second bent portion 452 on the inner side of the electrode assembly 500 is a second region prone to a lithium precipitation reaction, and the thickening layer 430 is disposed on at least one side of the positive electrode current collector 410 of the second bent portion 452 to ensure that the capacity of the positive electrode active material in this region is less than that of the corresponding negative electrode active material, thereby weakening or preventing the lithium de-intercalation reaction of the active material layer of the positive electrode sheet 400 in this region, improving the safety and service life of the battery, and also ensuring the energy density of the battery.

According to some embodiments of the present application, optionally, the positive electrode current collector 410 of the second bent portion 452 is configured with an inner side and an outer side, and the thickening layer 430 is disposed on the inner side of the positive electrode current collector 410 of the second bent portion 452.

For the electrode assembly 500 of the wound structure, the inner side of the positive electrode current collector 410 is larger than the outer side of the corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of the second bent portion 452, which can reduce the capacity of the positive electrode active material on the inner side of the positive electrode current collector 410 of the second bent portion 452, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

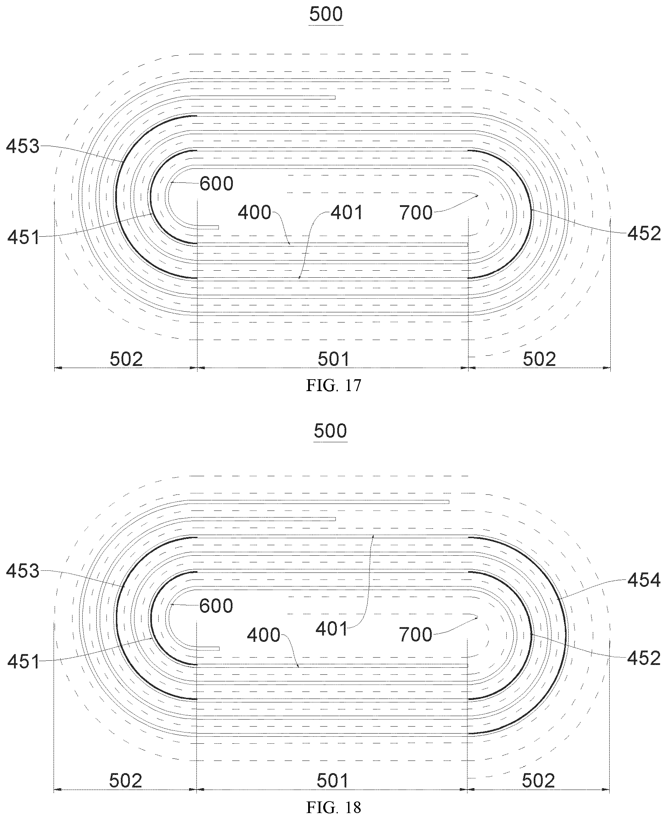

According to some embodiments of the present application, optionally, refer to FIG. 17, where FIG. 17 is a schematic structural diagram of a fifth type of electrode assembly 500 in some embodiments of the present application. In the winding direction, the positive electrode sheet 400 has a third bent portion 453 adjacent to the second bent portion 452, and the thickening layer 430 is disposed on at least one side of the positive electrode current collector 410 of the third bent portion 453 in the thickness direction.

The third bent portion 453 has the third largest bending curvature in the positive electrode sheet 400, and a straight portion 401 is disposed between the third bent portion 453 and the second bent portion 452.

As an example, the third bent portion 453 may include the positive electrode current collector 410, the second positive electrode active material layer 440 on the outer side of the positive electrode current collector 410, the thickening layer 430 on the inner side of the positive electrode current collector 410, and the first positive electrode active material layer 420; or the third bent portion 453 may include the positive electrode current collector 410, the thickening layer 430 on two sides of the positive electrode current collector 410, and the first positive electrode active material layer 420; or the third bent portion 453 may include the positive electrode current collector 410, the thickening layer 430 on the inner side of the positive electrode current collector 410, and the first positive electrode active material layer 420; or the third bent portion 453 may include the positive electrode current collector 410, the thickening layer 430 on the outer side of the positive electrode current collector 410, and the first positive electrode active material layer 420.

The third bent portion 453 on the inner side of the electrode assembly 500 is a third region prone to a lithium precipitation reaction, and the thickening layer 430 is disposed on at least one side of the positive electrode current collector 410 of the third bent portion 453 to ensure that the capacity of the positive electrode active material in this region is less than that of the corresponding negative electrode active material, thereby weakening or preventing the lithium de-intercalation reaction of the active material layer of the positive electrode sheet 400 in this region, improving the safety and service life of the battery, and also ensuring the energy density of the battery.

According to some embodiments of the present application, optionally, the positive electrode current collector 410 of the third bent portion 453 is configured with an inner side and an outer side, and the thickening layer 430 is disposed on the inner side of the positive electrode current collector 410 of the third bent portion 453.

For the electrode assembly 500 of the wound structure, the inner side of the positive electrode current collector 410 is larger than the outer side of the corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of the third bent portion 453, which can reduce the capacity of the positive electrode active material on the inner side of the positive electrode current collector 410 of the third bent portion 453, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

According to some embodiments of the present application, optionally, refer to FIG. 18, where FIG. 18 is a schematic structural diagram of a sixth type of electrode assembly 500 in some embodiments of the present application. In the winding direction, the positive electrode sheet 400 has a fourth bent portion 454 adjacent to the third bent portion 453, and the thickening layer 430 is disposed on at least one side of the positive electrode current collector 410 of the fourth bent portion 454 in the thickness direction.

The fourth bent portion 454 has the fourth largest bending curvature in the positive electrode sheet 400, and a straight portion 401 is disposed between the fourth bent portion 454 and the third bent portion 453.

As an example, the fourth bent portion 454 may include the positive electrode current collector 410, the second positive electrode active material layer 440 on the outer side of the positive electrode current collector 410, the thickening layer 430 on the inner side of the positive electrode current collector 410, and the first positive electrode active material layer 420; or the fourth bent portion 454 may include the positive electrode current collector 410, the thickening layer 430 on two sides of the positive electrode current collector 410, and the first positive electrode active material layer 420; or the fourth bent portion 454 may include the positive electrode current collector 410, the thickening layer 430 on the inner side of the positive electrode current collector 410, and the first positive electrode active material layer 420; or the fourth bent portion 454 may include the positive electrode current collector 410, the thickening layer 430 on the outer side of the positive electrode current collector 410, and the first positive electrode active material layer 420.

The fourth bent portion 454 on the inner side of the electrode assembly 500 is a fourth region prone to a lithium precipitation reaction, and the thickening layer 430 is disposed on at least one side of the positive electrode current collector 410 of the fourth bent portion 454 to ensure that the capacity of the positive electrode active material in this region is less than that of the corresponding negative electrode active material, thereby weakening or preventing the lithium de-intercalation reaction of the active material layer of the positive electrode sheet 400 in this region, improving the safety and service life of the battery, and also ensuring the energy density of the battery.

According to some embodiments of the present application, optionally, the positive electrode current collector 410 of the fourth bent portion 454 is configured with an inner side and an outer side, and the thickening layer 430 is disposed on the inner side of the positive electrode current collector 410 of the fourth bent portion 454.

For the electrode assembly 500 of the wound structure, the inner side of the positive electrode current collector 410 is larger than the outer side of the corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of the fourth bent portion 454, which can reduce the capacity of the positive electrode active material on the inner side of the positive electrode current collector 410 of the fourth bent portion 454, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

In addition, for the electrode assembly 500 of the wound structure, the positive electrode sheet 400 may be provided with the thickening layer 430 only at the second bent portion 452, the third bent portion 453, the fourth bent portion 454 or other bent portions, or only at the second bent portion 452 and the third bent portion 453, or only at the third bent portion 453 and the fourth bent portion 454, or only at the second bent portion 452, the third bent portion 453 and the fourth bent portion 454, which is not limited in the present application.

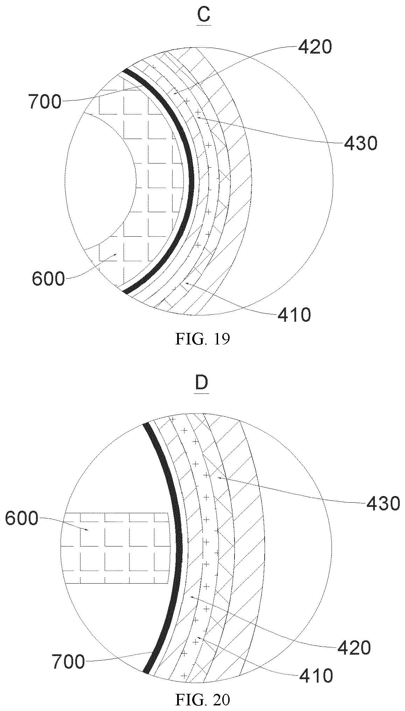

According to some embodiments of the present application, optionally, refer to FIGs. 10, 11, 19 and 20, where FIG. 19 is a schematic diagram of a partial structure of the second type of electrode assembly 500 in some embodiments of the present application, and FIG. 20 is a schematic diagram of a partial structure of the third type of electrode assembly 500 in some embodiments of the present application. The positive electrode sheet 400 and the negative electrode sheet 600 are folded to form a laminated structure, the positive electrode sheet 400 has a fifth bent portion that clads the negative electrode sheet 600, and the thickening layer 430 is disposed on at least one side of the positive electrode current collector 410 of the fifth bent portion in the thickness direction.

Because each curve formed by folding the positive electrode sheet 400 on the outer side in the bent region 502 of the laminated electrode assembly 500 has the same curvature, the fifth bent portion may be a bent portion at any position.

With reference to FIGs. 19 and 20, the fifth bent portion includes the positive electrode current collector 410, the second positive electrode active material layer 440 on the outer side of the positive electrode current collector 410, the thickening layer 430 on the inner side of the positive electrode current collector 410, and the first positive electrode active material layer 420.

In other embodiments of the present application, the fifth bent portion may include the positive electrode current collector 410, the thickening layer 430 on two sides of the positive electrode current collector 410, and the first positive electrode active material layer 420; or the fifth bent portion may include the positive electrode current collector 410, the thickening layer 430 on the inner side of the positive electrode current collector 410, and the first positive electrode active material layer 420; or the fifth bent portion may include the positive electrode current collector 410, the thickening layer 430 on the outer side of the positive electrode current collector 410, and the first positive electrode active material layer 420.

The fifth bent portion of the laminated structure is a region prone to a lithium precipitation reaction, and the thickening layer 430 is disposed on at least one side of the positive electrode current collector 410 of the fifth bent portion to ensure that the capacity of the positive electrode active material in this region is less than that of the corresponding negative electrode active material, thereby weakening or preventing the lithium de-intercalation reaction of the active material layer of the positive electrode sheet 400 in this region, improving the safety and service life of the battery, and also ensuring the energy density of the battery.

According to some embodiments of the present application, optionally, in some embodiments, the positive electrode current collector 410 of the fifth bent portion is configured with an inner side and an outer side, and the thickening layer 430 is disposed on the inner side of the positive electrode current collector 410 of the fifth bent portion.

For the electrode assembly 500 of the laminated structure, the inner side of the positive electrode current collector 410 is larger than the outer side of the corresponding negative electrode current collector. In this case, the capacity of the positive electrode active material on the inner side of the positive electrode current collector 410 is greater than that of the corresponding negative electrode active material under normal circumstances, so that a lithium precipitation reaction is very likely to occur. The thickening layer 430 is disposed on the inner side of the positive electrode current collector 410 of the fifth bent portion, which can reduce the capacity of the positive electrode active material on the inner side of the positive electrode current collector 410 of the fifth bent portion, thereby ensuring that the capacity of the positive electrode active material in this region is less than that of the corresponding negative electrode active material, then weakening or preventing the lithium de-intercalation reaction of the active material layer of the positive electrode sheet 400 in some bent regions 502, and improving the safety and service life of the battery.

The electrode assembly of the present application will be further described in detail below in conjunction with examples. Structures and parameters of electrode assemblies in Examples 1-35 and Comparative Examples 1-9 are shown in Table 1 and Table 2.

Examples 1-23 and Comparative Examples 1-3 represent the electrode assemblies of the wound structure shown in FIGs. 9 and 16-18, Examples 24-29 and Comparative Examples 4-6 represent the electrode assembly of the laminated structure shown in FIG. 10, and Examples 30-35 and Comparative Examples 7-9 represent the electrode assembly of the laminated structure shown in FIG. 11.

In addition, the positive electrode active material layer is disposed on two sides of the positive electrode current collector of the positive electrode sheet.

The ratio of the thickness of the second positive electrode active material layer to the thickness sum of the first positive electrode active material layer and the thickening layer in all examples and comparative examples is 1:1.

**Table 1 Examples and comparative examples of electrode assemblies of wound structure**

| Item | Position of thickening layer | | | | | Thickness of first positive electrode active material layer/ thickness of second positive electrode active material layer | Hole region | |
|---|---|---|---|---|---|---|---|---|
| | First bent portion | Second bent portion | Third bent portion | Fourth bent portion | All bent portions | | Area of hole region/ area of bonding surface | Inner diameter of holes |
| Example 1 | Inner side | Inner side | Inner side | Inner side | / | 50% | 30% | 500 µm |
| Example 2 | Double sides | Double sides | Double sides | Double sides | / | 50% | 30% | 500 µm |
| Example 3 | Inner side | Inner side | Inner side | / | / | 50% | 30% | 500 µm |
| Example 4 | Double sides | Double sides | Double sides | / | / | 50% | 30% | 500 µm |
| Example 5 | Inner side | Inner side | / | / | / | 50% | 30% | 500 µm |
| Example 6 | Double sides | Double sides | / | / | / | 50% | 30% | 500 µm |
| Example 7 | Inner side | / | / | / | / | 50% | 30% | 500 µm |
| Example 8 | Double sides | / | / | / | / | 50% | 30% | 500 µm |
| Example 9 | / | / | / | / | Inner side | 50% | 30% | 500 µm |
| Example 10 | / | / | / | / | Double sides | 50% | 30% | 500 µm |
| Example 11 | Inner side | Inner side | Inner side | Inner side | / | 20% | 30% | 500 µm |
| Example 12 | Inner side | Inner side | Inner side | Inner side | / | 30% | 30% | 500 µm |
| Example 13 | Inner side | Inner side | Inner side | Inner side | / | 45% | 30% | 500 µm |
| Example 14 | Inner side | Inner side | Inner side | Inner side | / | 55% | 30% | 500 µm |
| Example 15 | Inner side | Inner side | Inner side | Inner side | / | 60% | 30% | 500 µm |
| Example 16 | Inner side | Inner side | Inner side | Inner side | / | 80% | 30% | 500 µm |
| Example 17 | Inner side | Inner side | Inner side | Inner side | / | 50% | 20% | 500 µm |
| Example 18 | Inner side | Inner side | Inner side | Inner side | / | 50% | 10% | 500 µm |
| Example 19 | Inner side | Inner side | Inner side | Inner side | / | 50% | 60% | 500 µm |
| Example 20 | Inner side | Inner side | Inner side | Inner side | / | 50% | 30% | 100 µm |
| Example 21 | Inner side | Inner side | Inner side | Inner side | / | 50% | 30% | 5000 µm |
| Example 22 | Inner side | Inner side | Inner side | Inner side | / | 50% | 30% | 50 µm |
| Example 23 | Inner side | Inner side | Inner side | Inner side | / | 50% | 30% | 6000 µm |
| Comparative Example 1 | / | / | / | / | / | / | / | / |
| Comparative Example 2 | Inner side | Inner side | Inner side | Inner side | / | 10% | 30% | 500 µm |
| Comparative Example 3 | Inner side | Inner side | Inner side | Inner side | / | 90% | 30% | 500 µm |

**Table 2 Examples and comparative examples of electrode assemblies of laminated structure**

| Item | Position of thickening layer | | Thickness of first positive electrode active material layer/ thickness of second positive electrode active material layer | Hole region | |
|---|---|---|---|---|---|
| | All fifth bent portions in FIG. 10 | All fifth bent portions in FIG. 11 | | Area of hole region/ area of bonding surface | Inner diameter of holes |
| Example 24 | Only inner side | / | 20% | 30% | 500 µm |
| Example 25 | Double sides | / | 20% | 30% | 500 µm |
| Example 26 | Only inner side | / | 80% | 30% | 500 µm |
| Example 27 | Double sides | / | 80% | 30% | 500 µm |
| Example 28 | Only inner side | / | 50% | 30% | 500 µm |
| Example 29 | Double sides | / | 50% | 30% | 500 µm |
| Example 30 | / | Only inner side | 20% | 30% | 500 µm |
| Example 31 | / | Double sides | 20% | 30% | 500 µm |
| Example 32 | / | Only inner side | 80% | 30% | 500 µm |
| Example 33 | / | Double sides | 80% | 30% | 500 µm |
| Example 34 | / | Only inner side | 50% | 30% | 500 µm |
| Example 35 | / | Double sides | 50% | 30% | 500 µm |
| Comparative Example 4 | / | / | / | / | / |
| Comparative Example 5 | Only inner side | / | 10% | 30% | 500 µm |
| Comparative Example 6 | Only inner side | / | 90% | 30% | 500 µm |
| Comparative Example 7 | / | / | / | / | / |
| Comparative Example 8 | / | Only inner side | 10% | 30% | 500 µm |
| Comparative Example 9 | / | Only inner side | 90% | 30% | 500 µm |

### Test Example

The electrode assemblies in Examples 1-35 and Comparative Examples 1-9 of the present application were made into batteries, then capacity retention rates of the obtained batteries were measured separately, and the results are shown in Table 3.

Preparation method of a battery was as follows:

### (1) Preparation of a negative electrode sheet

Graphite as a negative electrode active material, acetylene black as a conductive agent, styrene-butadiene rubber as a binder, and carboxymethylcellulose sodium as a thickening agent were mixed in a weight ratio of graphite: acetylene black: styrene-butadiene rubber: carboxymethylcellulose sodium=95:2:2:1, and deionized water was added, followed by thorough mixing to form a uniform negative electrode slurry; and a copper foil as a negative electrode current collector was coated with the slurry and then dried and cold-pressed to obtain the negative electrode sheet, where the copper foil had a thickness of 6 µm and the electrode sheet had a total thickness of 158.5 µm.

### (2) Preparation of a positive electrode sheet

NCM211 as a positive electrode active material, acetylene black as a conductive agent, and polyvinylidene fluoride as a binder were mixed in a weight ratio of 97:2:1, and N-methyl pyrrolidone as a solvent was added, followed by thorough mixing to form a uniform positive electrode slurry; and an aluminum foil as a positive electrode current collector was coated with the slurry and then dried and cold-pressed to obtain the positive electrode sheet. Corners of the positive electrode sheet were covered with a layer of insulating rubber tape before coated with the slurry. The height of the tape was flush with the width of the electrode sheet, and the length of the tape completely covers the corners of the positive electrode sheet and extends to a large surface. In this solution, all tapes were hot-melt tapes having a width of 24 µm.

### (3) Preparation of an electrolytic solution

In an argon glove box with a water content < 10 ppm, a carbonate solvent EC and EMC were mixed in a weight ratio of 3:7 to obtain a mixed solvent, and then a fully dried lithium salt LiPF₆ and additives PS and VC were dissolved in the mixed solvent, followed by thorough mixing to obtain the electrolytic solution, where the LiPF₆ had a concentration of 1 mol/L, and a weight ratio of PS to VC was 1%.

### (4) Preparation of a battery

The positive electrode sheet, a separator, and the negative electrode sheet were stacked in sequence and then wound to obtain a bare cell, where the separator was located between the positive and negative electrode sheets to play a role of isolation; and the bare cell was placed in an outer packaging foil or a metal shell, and the prepared electrolytic solution was injected into the dried cell, which was then encapsulated in vacuum and stood to obtain the battery.

A testing method for a capacity retention rate of the battery was as follows:
At 45°C, the lithium-ion secondary battery was first charged with 0.5C constant current to 4.3V (which may be other voltage, where 4.3V corresponds to 100% SOC), further charged with the 4.3V constant voltage to 0.025C current, and then discharged with the 0.5C constant current to 3.0V. This was a charging and discharging cycle process, and the discharge capacity of the current time was the discharge capacity of the first cycle, denoted as Cap1. The lithium-ion secondary battery was cyclically charged and discharged as described above, and the discharge capacity of the 10^{th} cycle was denoted as Cap2. The capacity retention rate of the lithium-ion secondary battery after 10 cycles (%) M =[Cap2/Cap1] × 100%. If the M value is larger, it indicates that the capacity loss caused by lithium precipitation in the battery is lower, and the improvement effect is better.

**Table 3 Test results in Examples 1-35 and Comparative Examples 1-9**

| Item | Capacity retention rate of battery | | |
|---|---|---|---|
| | Cap1 | Cap2 | M (%) |
| Example 1 | 116.3 | 116.1 | 99.8 |
| Example 2 | 115.6 | 115.4 | 99.8 |
| Example 3 | 116.0 | 115.8 | 99.8 |
| Example 4 | 115.9 | 115.7 | 99.8 |
| Example 5 | 116.4 | 116.1 | 99.7 |
| Example 6 | 116.2 | 115.9 | 99.7 |
| Example 7 | 116.7 | 116.2 | 99.6 |
| Example 8 | 116.5 | 116.0 | 99.6 |
| Example 9 | 110.1 | 109.5 | 99.5 |
| Example 10 | 102.7 | 102.2 | 99.5 |
| Example 11 | 115.9 | 115.6 | 99.8 |
| Example 12 | 116.0 | 115.8 | 99.8 |
| Example 13 | 116.2 | 116.0 | 99.8 |
| Example 14 | 116.4 | 116.0 | 99.7 |
| Example 15 | 116.4 | 116.0 | 99.6 |
| Example 16 | 116.7 | 115.9 | 99.3 |
| Example 17 | 116.5 | 116.2 | 99.7 |
| Example 18 | 116.8 | 116.2 | 99.5 |
| Example 19 | 115.6 | 115.1 | 99.6 |
| Example 20 | 115.6 | 115.3 | 99.7 |
| Example 21 | 116.9 | 116.5 | 99.6 |
| Example 22 | 114.2 | 113.5 | 99.4 |
| Example 23 | 116.9 | 115.8 | 99 |
| Comparative Example 1 | 117.0 | 115.7 | 98.9 |
| Comparative Example 2 | 115.7 | 115.5 | 99.8 |
| Comparative Example 3 | 116.9 | 115.8 | 99.1 |
| Example 24 | 110.0 | 109.6 | 99.6 |
| Example 25 | 107.0 | 106.6 | 99.6 |
| Example 26 | 115.0 | 114.1 | 99.2 |
| Example 27 | 113.0 | 112.1 | 99.2 |
| Example 28 | 112.0 | 111.6 | 99.6 |
| Example 29 | 106.0 | 105.6 | 99.6 |
| Example 30 | 111.0 | 110.4 | 99.5 |
| Example 31 | 107.0 | 106.5 | 99.5 |
| Example 32 | 115.0 | 113.9 | 99 |
| Example 33 | 112.0 | 110.9 | 99 |
| Example 34 | 113.0 | 112.4 | 99.5 |
| Example 35 | 108.0 | 107.5 | 99.5 |
| Comparative Example 4 | 117.0 | 115.9 | 99.1 |
| Comparative Example 5 | 108.0 | 107.6 | 99.6 |
| Comparative Example 6 | 116.0 | 115.1 | 99.2 |
| Comparative Example 7 | 117.0 | 103.9 | 88.8 |
| Comparative Example 8 | 109.0 | 108.6 | 99.6 |
| Comparative Example 9 | 116.0 | 115.0 | 99.1 |

From Example 1 and Example 2, for the electrode assembly of the wound structure, the thickening layer was disposed on the inner side or double sides of the first bent portion, the second bent portion, the third bent portion, and the fourth bent portion, which can reduce or avoid the occurrence of lithium precipitation, so that the capacity retention rate of the battery after 10 cycles can reach 99.8%; the capacity of the battery in Example 1 with the thickening layer only on the inner side was slightly higher than that of the battery in Example 2 with the thickening layer on double sides; and the fourth bent portion was substantially not subjected to lithium precipitation, so the thickening layer may be disposed at the first four bent portions in consideration of process fluctuations.

By comparing Examples 3 and 4 with Example 1, for the electrode assembly of the wound structure, the thickening layer was disposed on the inner side or double sides of the first bent portion, the second bent portion, and the third bent portion, which can reduce or avoid the occurrence of lithium precipitation; in addition, the fourth bent portion was substantially not subjected to lithium precipitation, so the capacity retention rate of the battery after 10 cycles remained almost unchanged; and the capacity of the battery in Example 3 with the thickening layer only on the inner side was slightly higher than that of the battery in Example 4 with the thickening layer on double sides.

By comparing Examples 5 and 6 with Example 2, for the electrode assembly of the wound structure, the thickening layer was disposed on the inner side or double sides of the first bent portion and the second bent portion, which can reduce or avoid the occurrence of lithium precipitation; however, the thickening layer was not disposed at the third bent portion, and the lithium precipitation may occur in the third bent portion, so the capacity retention rate of the battery after 10 cycles was 99.7%; and the capacity of the battery in Example 5 with the thickening layer only on the inner side was slightly higher than that of the battery in Example 6 with the thickening layer on double sides.

By comparing Examples 7 and 8 with Example 3, for the electrode assembly of the wound structure, the thickening layer was disposed on the inner side or double sides of only the first bent portion, which can reduce or avoid the occurrence of lithium precipitation; however, the thickening layer was not disposed at the second bent portion, and the lithium precipitation may occur in the second bent portion, so the capacity retention rate of the battery after 10 cycles was 99.6%; and the capacity of the battery in Example 7 with the thickening layer only on the inner side was slightly higher than that of the battery in Example 8 with the thickening layer on double sides.

By comparing Examples 9 and 10 with Example 1, for the electrode assembly of the wound structure, the thickening layer was disposed on all the bent portions, which can reduce or avoid the occurrence of lithium precipitation; because the lithium precipitation almost did not occur or seldom occurred in the fourth bent portion and the bent portion outside the fourth bent portion, the capacity retention rate of the battery was almost not affected; and the thickening layer was disposed on the bent portion outside the fourth bent portion, which may affect the capacity of the battery and result in a decrease in the capacity of the battery.

By comparing Examples 11-16 with Example 1, when the ratio of the thickness of the first positive electrode active material layer to the thickness of the second positive electrode active material layer was 20-80%, the capacity retention rate of the battery after 10 cycles can reach 99.3-99.8%, and the smaller the ratio of the thickness of the first positive electrode active material layer to the thickness of the second positive electrode active material layer, the higher the capacity retention rate of the battery after 10 cycles.

By comparing Examples 17-19 with Example 1, when the ratio of the area of the plurality of hole regions distributed on the bonding surface to the area of the bonding surface was 20% to 50%, the capacity retention rate of the battery after 10 cycles can reach 99.7-99.8%; when the ratio of the area of the plurality of hole regions distributed on the bonding surface to the area of the bonding surface was less than 20%, the decrease in the ratio of the area of the hole regions may decrease the conductivity, increase the internal resistance, and decrease the capacity retention rate of the battery after 10 cycles; and when the ratio of the area of the plurality of hole regions distributed on the bonding surface to the area of the bonding surface was greater than 50%, lithium precipitation may slightly occur, and the capacity retention rate of the battery after 10 cycles may decrease.

By comparing Examples 20-23 with Example 1, when the inner diameter of the holes was 100-5000 µm, the capacity retention rate of the battery after 10 cycles can reach 99.6-99.8%; when the inner diameter of the holes was less than 100 µm, the small inner diameter of the holes may cause poor bonding and shedding of positive electrode active material particles and a decrease in the capacity retention rate of the battery after 10 cycles; and when the inner diameter of the holes was greater than 5000 µm, the capacity retention rate of the battery after 10 cycles decreased.

By comparing Comparative Example 1 with Example 1, lithium precipitation was severe in the absence of a thickening layer on the bent portion in Comparative Example 1; and although the discharge capacity of the first cycle was slightly higher than that in Example 1, the capacity retention rate of the battery after 10 cycles was only 98.9%, which was far lower than the capacity retention rate of the battery after 10 cycles in Example 1.

By comparing Comparative Example 2 with Example 1, when the ratio of the thickness of the first positive electrode active material layer to the thickness of the second positive electrode active material layer was less than 20%, although the capacity retention rate of the battery after 10 cycles can reach 99.8%, the discharge capacity of the first cycle was relatively low.

By comparing Comparative Example 3 with Example 1, when the ratio of the thickness of the first positive electrode active material layer to the thickness of the second positive electrode active material layer was greater than 80%, the capacity retention rate of the battery after 10 cycles was relatively low.

From Example 24 and Example 25, for the electrode assembly of the laminated structure shown in FIG. 10, the thickening layer was disposed on the inner side or double sides of all the fifth bent portions, which can reduce or avoid the occurrence of lithium precipitation, so that the capacity retention rate of the battery after 10 cycles can reach 99.6%; and the capacity of the battery in Example 24 with the thickening layer only on the inner side was slightly higher than that of the battery in Example 25 with the thickening layer on double sides.

By comparing Examples 26-29 with Example 24, when the ratio of the thickness of the first positive electrode active material layer to the thickness of the second positive electrode active material layer was 20-80%, the capacity retention rate of the battery after 10 cycles can reach 99.2-99.6%, and the smaller the ratio of the thickness of the first positive electrode active material layer to the thickness of the second positive electrode active material layer, the higher the capacity retention rate of the battery after 10 cycles.

By comparing Comparative Example 4 with Example 24, lithium precipitation was severe in the absence of a thickening layer on the bent portion in Comparative Example 4; and although the discharge capacity of the first cycle was higher than that in Example 24, the capacity retention rate of the battery after 10 cycles was only 99.1%, which was far lower than the capacity retention rate of the battery after 10 cycles in Example 24.

By comparing Comparative Example 5 with Example 24, when the ratio of the thickness of the first positive electrode active material layer to the thickness of the second positive electrode active material layer was less than 20%, although the capacity retention rate of the battery after 10 cycles can reach 99.6%, the discharge capacity of the first cycle was relatively low.

By comparing Comparative Example 6 with Example 24, when the ratio of the thickness of the first positive electrode active material layer to the thickness of the second positive electrode active material layer was greater than 80%, the capacity retention rate of the battery after 10 cycles was relatively low.

From Example 30 and Example 31, for the electrode assembly of the laminated structure shown in FIG. 11, the thickening layer was disposed on the inner side or double sides of all the fifth bent portions, which can reduce or avoid the occurrence of lithium precipitation, so that the capacity retention rate of the battery after 10 cycles can reach 99.5%; and the capacity of the battery in Example 30 with the thickening layer only on the inner side was slightly higher than that of the battery in Example 31 with the thickening layer on double sides.

By comparing Examples 32-35 with Example 30, when the ratio of the thickness of the first positive electrode active material layer to the thickness of the second positive electrode active material layer was 20-80%, the capacity retention rate of the battery after 10 cycles can reach 99-99.5%, and the smaller the ratio of the thickness of the first positive electrode active material layer to the thickness of the second positive electrode active material layer, the higher the capacity retention rate of the battery after 10 cycles.

By comparing Comparative Example 7 with Example 30, lithium precipitation was severe in the absence of a thickening layer on the bent portion in Comparative Example 7; and although the discharge capacity of the first cycle was higher than that in Example 30, the capacity retention rate of the battery after 10 cycles was only 88.8%, which was far lower than the capacity retention rate of the battery after 10 cycles in Example 30.

By comparing Comparative Example 8 with Example 30, when the ratio of the thickness of the first positive electrode active material layer to the thickness of the second positive electrode active material layer was less than 20%, although the capacity retention rate of the battery after 10 cycles can reach 99.6%, the discharge capacity of the first cycle was relatively low.

By comparing Comparative Example 9 with Example 30, when the ratio of the thickness of the first positive electrode active material layer to the thickness of the second positive electrode active material layer was greater than 80%, the capacity retention rate of the battery after 10 cycles was relatively low.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims of the present application The present application is not limited to the specific embodiments disclosed herein, but includes all technical solutions falling within the scope of the claims.

## Claims

1. A positive electrode sheet (400), comprising a positive electrode current collector (410) and a positive electrode active material layer, wherein the positive electrode active material layer is disposed on at least one side of the positive electrode current collector (410) in a thickness direction, and the positive electrode sheet (400) is provided with a straight portion (401) and to-be-bent portions (402);
a thickening layer (430) is disposed on at least one side of the positive electrode current collector (410) of at least a part of the to-be-bent portions (402) in the thickness direction, the thickening layer (430) is disposed between the positive electrode current collector (410) and the positive electrode active material layer, the positive electrode active material layer covering a surface of the thickening layer (430) is a first positive electrode active material layer (420), and the positive electrode active material layer located in the straight portion (401) and connected to the first positive electrode active material layer (420) is a second positive electrode active material layer (440); and
a ratio of a thickness of the first positive electrode active material layer (420) to a thickness of the second positive electrode active material layer (440) is 20-80%.

2. The positive electrode sheet (400) according to claim 1, wherein the ratio of the thickness of the first positive electrode active material layer (420) to the thickness of the second positive electrode active material layer (440) is 30-60%, preferably 45-55%.

3. The positive electrode sheet (400) according to any one of claims 1-2, wherein a ratio of the thickness of the second positive electrode active material layer (440) to a sum of the thickness of the first positive electrode active material layer (420) and the thickening layer (430) is 1:(0.9-1.1);
or
wherein the ratio of the thickness of the second positive electrode active material layer (440) to a sum of the thickness of the first positive electrode active material layer (420) and the thickening layer (430) is 1:(0.95-1.05).

4. The positive electrode sheet (400) according to any one of claims 1-3, wherein the positive electrode active material layer is disposed on both sides of the positive electrode current collector (410) in the thickness direction.

5. The positive electrode sheet (400) according to any one of claims 1-4, wherein a plurality of hole regions (431) are distributed in the thickening layer (430), and the hole region (431) is provided therein with a positive electrode active material for connecting the positive electrode current collector (410) and the first positive electrode active material layer (420),
preferably, a surface where the thickening layer (430) is bonded to the first positive electrode active material layer (420) is a bonding surface (432), and a ratio of an area of the plurality of hole regions (431) distributed on the bonding surface (432) to an area of the bonding surface (432) is 20% to 50%;
and/or
wherein holes penetrating the thickening layer (430) are distributed in the hole region (431) of the thickening layer (430), the holes are filled with the positive electrode active material, and the holes have an inner diameter of 100-5000 µm.

6. The positive electrode sheet (400) according to any one of claims 1-5, wherein the thickening layer (430) is made of an insulating material;
and/or
wherein a material of the thickening layer (430) comprises acrylic resin and/or polyolefin resin;
the acrylic resin comprises any one or more of acrylic acid-methacrylic acid copolymer, acrylic acid-butenoic acid copolymer, acrylic acid-itaconic acid copolymer, acrylic acid-maleic acid copolymer, acrylic acid-methyl methacrylate copolymer, acrylic acid-ethyl methacrylate copolymer, acrylic acid-n-butyl methacrylate copolymer, and acrylic acid-isobutyl methacrylate copolymer; and
the polyolefin resin comprises any one or more of polypropylene, polyethylene, polybutadiene rubber, ethylene-propylene acetate copolymer, ethylene-propylene copolymer, ethylene-vinyl acetate copolymer, maleic anhydride modified polyolefin, poly(butadiene-acrylonitrile), and styrene-maleic anhydride copolymer;
and/or
wherein the thickening layer (430) is bonded to the positive electrode current collector (410) and the first positive electrode active material layer (420) separately.

7. An electrode assembly (500), comprising: a negative electrode sheet (600) and the positive electrode sheet (400) according to any one of claims 1-6, wherein the positive electrode sheet (400) and the negative electrode sheet (600) are wound or folded to form bent regions (502) and a straight region (501), and the straight region (501) is connected to the bent regions (502); and
the to-be-bent portions (402) are wound or folded to form bent portions, the bent portions are located in the bent regions (502), and a straight portion (401) is located in the straight region (501).

8. The electrode assembly (500) according to claim 7, wherein the positive electrode sheet (400) and the negative electrode sheet (600) are wound to form a wound structure, the positive electrode current collector (410) of the bent portion has an inner side and an outer side, and the thickening layer (430) is disposed on the inner side of the positive electrode current collector (410) of at least a part of the bent portions;
or
wherein the positive electrode sheet (400) and the negative electrode sheet (600) are folded to form a laminated structure, the positive electrode sheet (400) has a fifth bent portion that clads the negative electrode sheet (600), and the thickening layer (430) is disposed on at least one side of the positive electrode current collector (410) of the fifth bent portion in the thickness direction,
preferably,
wherein the positive electrode current collector (410) of the fifth bent portion is provided with an inner side and an outer side, and the thickening layer (430) is disposed on the inner side of the positive electrode current collector (410) of the fifth bent portion.

9. The electrode assembly (500) according to claim 7, wherein the positive electrode sheet (400) and the negative electrode sheet (600) are wound to form a wound structure, the positive electrode sheet (400) has a first bent portion (451) on an innermost side, and the thickening layer (430) is disposed on at least one side of the positive electrode current collector (410) of the first bent portion (451) in the thickness direction.

10. The electrode assembly (500) according to claim 9, wherein the positive electrode current collector (410) of the first bent portion (451) is provided with an inner side and an outer side, and the thickening layer (430) is disposed on the inner side of the positive electrode current collector (410) of the first bent portion (451).

11. The electrode assembly (500) according to claim 9 or 10, wherein in a winding direction, the positive electrode sheet (400) has a second bent portion (452) adjacent to the first bent portion (451), and the thickening layer (430) is disposed on at least one side of the positive electrode current collector (410) of the second bent portion (452) in the thickness direction.

12. The electrode assembly (500) according to claim 11, wherein the positive electrode current collector (410) of the second bent portion (452) is provided with an inner side and an outer side, and the thickening layer (430) is disposed on the inner side of the positive electrode current collector (410) of the second bent portion (452).

13. The electrode assembly (500) according to claim 11 or 12, wherein in the winding direction, the positive electrode sheet (400) has a third bent portion (453) adjacent to the second bent portion (452), and the thickening layer (430) is disposed on at least one side of the positive electrode current collector (410) of the third bent portion (453) in the thickness direction.

14. The electrode assembly (500) according to claim 13, wherein the positive electrode current collector (410) of the third bent portion (453) is provided with an inner side and an outer side, and the thickening layer (430) is disposed on the inner side of the positive electrode current collector (410) of the third bent portion (453);
and/or
wherein in the winding direction, the positive electrode sheet (400) has a fourth bent portion (454) adjacent to the third bent portion (453), and the thickening layer (430) is disposed on at least one side of the positive electrode current collector (410) of the fourth bent portion (454) in the thickness direction,
preferably,
wherein the positive electrode current collector (410) of the fourth bent portion (454) is provided with an inner side and an outer side, and the thickening layer (430) is disposed on the inner side of the positive electrode current collector (410) of the fourth bent portion (454).

15. A battery cell (20), comprising the electrode assembly (500) according to any one of claims 7-14.

## Patentansprüche

1. Positivelektrodenlage (400), umfassend einen Positivelektroden-Stromkollektor (410) und eine Positivelektroden-Aktivmaterialschicht, wobei die Positivelektroden-Aktivmaterialschicht auf mindestens einer Seite des Positivelektroden-Stromkollektors (410) in einer Dickenrichtung angeordnet ist, und die Positivelektrodenlage (400) mit einem geraden Abschnitt (401) und zu biegenden Abschnitten (402) versehen ist;
eine Verdickungsschicht (430) auf mindestens einer Seite des Positivelektroden-Stromkollektors (410) von mindestens einem Teil der zu biegenden Abschnitte (402) in der Dickenrichtung angeordnet ist, wobei die Verdickungsschicht (430) zwischen dem Positivelektroden-Stromkollektor (410) und der Positivelektroden-Aktivmaterialschicht angeordnet ist, die Positivelektroden-Aktivmaterialschicht, die eine Oberfläche der Verdickungsschicht (430) bedeckt, eine erste Positivelektroden-Aktivmaterialschicht (420) ist, und die Positivelektroden-Aktivmaterialschicht, die sich in dem geraden Abschnitt (401) befindet und mit der ersten Positivelektroden-Aktivmaterialschicht (420) verbunden ist, eine zweite Positivelektroden-Aktivmaterialschicht (440) ist; und
ein Verhältnis einer Dicke der ersten Positivelektroden-Aktivmaterialschicht (420) zu einer Dicke der zweiten Positivelektroden-Aktivmaterialschicht (440) 20 bis 80 % beträgt.

2. Positivelektrodenlage (400) nach Anspruch 1, wobei das Verhältnis der Dicke der ersten Positivelektroden-Aktivmaterialschicht (420) zu der Dicke der zweiten Positivelektroden-Aktivmaterialschicht (440) 30 bis 60 %, vorzugsweise 45 bis 55 % beträgt.

3. Positivelektrodenlage (400) nach einem der Ansprüche 1 bis 2, wobei ein Verhältnis der Dicke der zweiten Positivelektroden-Aktivmaterialschicht (440) zu einer Summe der Dicke der ersten Positivelektroden-Aktivmaterialschicht (420) und der Verdickungsschicht (430) 1:(0,9 bis 1,1) beträgt;
oder
wobei das Verhältnis der Dicke der zweiten Positivelektroden-Aktivmaterialschicht (440) zu einer Summe der Dicke der ersten Positivelektroden-Aktivmaterialschicht (420) und der Verdickungsschicht (430) 1:(0,95 bis 1,05) beträgt.

4. Positivelektrodenlage (400) nach einem der Ansprüche 1 bis 3, wobei die Positivelektroden-Aktivmaterialschicht auf beiden Seiten des Positivelektroden-Stromkollektors (410) in der Dickenrichtung angeordnet ist.

5. Positivelektrodenlage (400) nach einem der Ansprüche 1 bis 4, wobei eine Vielzahl von Lochregionen (431) in der Verdickungsschicht (430) verteilt ist, und die Lochregion (431) darin mit einem Positivelektroden-Aktivmaterial versehen ist, um den Positivelektroden-Stromkollektor (410) und die erste Positivelektroden-Aktivmaterialschicht (420) zu verbinden, vorzugsweise eine Oberfläche, wo die Verdickungsschicht (430), die an die erste Positivelektroden-Aktivmaterialschicht (420) gebondet ist, eine Bonding-Oberfläche (432) ist, und ein Verhältnis einer Fläche der Vielzahl von Lochregionen (431), die auf der Bonding-Oberfläche (432) verteilt sind, zu einer Fläche der Bonding-Oberfläche (432) 20 % bis 50 % beträgt;
und/oder
wobei Löcher, welche in die Verdickungsschicht (430) eindringen, in der Lochregion (431) der Verdickungsschicht (430) verteilt sind, wobei die Löcher mit dem Positivelektroden-Aktivmaterial gefüllt sind und die Löcher einen Innendurchmesser von 100 bis 5000 µm aufweisen.

6. Positivelektrodenlage (400) nach einem der Ansprüche 1 bis 5, wobei die Verdickungsschicht (430) aus einem Isoliermaterial gefertigt ist;
und/oder
wobei ein Material der Verdickungsschicht (430) Acrylharz und/oder Polyolefinharz umfasst; das Acrylharz jedwedes eine oder mehrere von Acrylsäure-Methacrylsäure-Copolymer, Acrylsäure-Butensäure-Copolymer, Acrylsäure-Itaconsäure-Copolymer, Acrylsäure-Maleinsäure-Copolymer, Acrylsäure-Methylmethacrylat-Copolymer, Acrylsäure-Ethylmethacrylat-Copolymer, Acrylsäure-n-Butylmethacrylat-Copolymer und Acrylsäure-Isobutylmethacrylat-Copolymer umfasst; und
das Polyolefinharz jedwedes eine oder mehrere von Polypropylen, Polyethylen, Polybutadienkautschuk, Ethylen-Propylen-Acetat-Copolymer, Ethylen-Propylen-Copolymer, Ethylen-Vinylacetat-Copolymer, mit Maleinsäureanhydrid modifiziertem Polyolefin, Poly-(Butadien-Acrylnitril) und Styrol-Maleinsäureanhydrid-Copolymer umfasst;
und/oder
wobei die Verdickungsschicht (430) separat an den Positivelektroden-Stromkollektor (410) und die erste Positivelektroden-Aktivmaterialschicht (420) gebondet ist.

7. Elektrodenanordnung (500), umfassend: eine Negativelektrodenlage (600) und die Positivelektrodenlage (400) nach einem der Ansprüche 1 bis 6, wobei die Positivelektrodenlage (400) und die Negativelektrodenlage (600) gewickelt oder gefaltet sind, um gebogene Regionen (502) und eine gerade Region (501) zu bilden, und die gerade Region (501) mit den gebogenen Regionen (502) verbunden ist; und
die zu biegenden Abschnitte (402) gewickelt oder gefaltet werden, um gebogene Abschnitte zu bilden, wobei die gebogenen Abschnitte sich in den gebogenen Regionen (502) befinden, und ein gerader Abschnitt (401) sich in der geraden Region (501) befindet.

8. Elektrodenanordnung (500) nach Anspruch 7, wobei die Positivelektrodenlage (400) und die Negativelektrodenlage (600) gewickelt sind, um eine gewickelte Struktur zu bilden, der Positivelektroden-Stromkollektor (410) des gebogenen Abschnitts eine Innenseite und eine Außenseite aufweist, und die Verdickungsschicht (430) auf der Innenseite des Positivelektroden-Stromkollektors (410) von mindestens einem Teil der gebogenen Abschnitte angeordnet ist; oder
wobei die Positivelektrodenlage (400) und die Negativelektrodenlage (600) gefaltet sind, um eine laminierte Struktur zu bilden, die Positivelektrodenlage (400) einen fünften gebogenen Abschnitt aufweist, der die Negativelektrodenlage (600) verkleidet, und die Verdickungsschicht (430) auf mindestens einer Seite des Positivelektroden-Stromkollektors (410) des fünften gebogenen Abschnitts in der Dickenrichtung angeordnet ist,
wobei vorzugsweise
der Positivelektroden-Stromkollektor (410) des fünften gebogenen Abschnitts mit einer Innenseite und einer Außenseite versehen ist, und die Verdickungsschicht (430) auf der Innenseite des Positivelektroden-Stromkollektors (410) des fünften gebogenen Abschnitts angeordnet ist.

9. Elektrodenanordnung (500) nach Anspruch 7, wobei die Positivelektrodenlage (400) und die Negativelektrodenlage (600) gewickelt sind, um eine gewickelte Struktur zu bilden, wobei die Positivelektrodenlage (400) einen ersten gebogenen Abschnitt (451) auf einer innersten Seite aufweist, und die Verdickungsschicht (430) auf mindestens einer Seite des Positivelektroden-Stromkollektors (410) des ersten gebogenen Abschnitts (451) in der Dickenrichtung angeordnet ist.

10. Elektrodenanordnung (500) nach Anspruch 9, wobei der Positivelektroden-Stromkollektor (410) des ersten gebogenen Abschnitts (451) mit einer Innenseite und einer Außenseite versehen ist, und die Verdickungsschicht (430) auf der Innenseite des Positivelektroden-Stromkollektors (410) des ersten gebogenen Abschnitts (451) angeordnet ist.

11. Elektrodenanordnung (500) nach Anspruch 9 oder 10, wobei in einer Wickelrichtung die Positivelektrodenlage (400) einen zweiten gebogenen Abschnitt (452) neben dem ersten gebogenen Abschnitt (451) aufweist, und die Verdickungsschicht (430) auf mindestens einer Seite des Positivelektroden-Stromkollektors (410) des zweiten gebogenen Abschnitts (452) in der Dickenrichtung angeordnet ist.

12. Elektrodenanordnung (500) nach Anspruch 11, wobei der Positivelektroden-Stromkollektor (410) des zweiten gebogenen Abschnitts (452) mit einer Innenseite und einer Außenseite versehen ist, und die Verdickungsschicht (430) auf der Innenseite des Positivelektroden-Stromkollektors (410) des zweiten gebogenen Abschnitts (452) angeordnet ist.

13. Elektrodenanordnung (500) nach Anspruch 11 oder 12, wobei in der Wickelrichtung die Positivelektrodenlage (400) einen dritten gebogenen Abschnitt (453) neben dem zweiten gebogenen Abschnitt (452) aufweist, und die Verdickungsschicht (430) auf mindestens einer Seite des Positivelektroden-Stromkollektors (410) des dritten gebogenen Abschnitts (453) in der Dickenrichtung angeordnet ist.

14. Elektrodenanordnung (500) nach Anspruch 13, wobei der Positivelektroden-Stromkollektor (410) des dritten gebogenen Abschnitts (453) mit einer Innenseite und einer Außenseite versehen ist, und die Verdickungsschicht (430) auf der Innenseite des Positivelektroden-Stromkollektors (410) des dritten gebogenen Abschnitts (453) angeordnet ist;
und/oder
wobei in der Wickelrichtung die Positivelektrodenlage (400) einen vierten gebogenen Abschnitt (454) neben dem dritten gebogenen Abschnitt (453) aufweist, und die Verdickungsschicht (430) auf mindestens einer Seite des Positivelektroden-Stromkollektors (410) des vierten gebogenen Abschnitts (454) in der Dickenrichtung angeordnet ist,
wobei vorzugsweise
der Positivelektroden-Stromkollektor (410) des vierten gebogenen Abschnitts (454) mit einer Innenseite und einer Außenseite versehen ist, und die Verdickungsschicht (430) auf der Innenseite des Positivelektroden-Stromkollektors (410) des vierten gebogenen Abschnitts (454) angeordnet ist.

15. Batteriezelle (20), umfassend die Elektrodenanordnung (500) nach einem der Ansprüche 7 bis 14.

## Revendications

1. Feuille d'électrode positive (400), comprenant un collecteur de courant d'électrode positive (410) et une couche de matériau actif d'électrode positive, la couche de matériau actif d'électrode positive étant disposée sur au moins un côté du collecteur de courant d'électrode positive (410) dans une direction de l'épaisseur, et la feuille d'électrode positive (400) étant pourvue d'une portion droite (401) et de portions à cintrer (402) ;
une couche d'épaississement (430) étant disposée sur au moins un côté du collecteur de courant d'électrode positive (410) d'au moins une partie des portions à cintrer (402) dans la direction de l'épaisseur, la couche d'épaississement (430) étant disposée entre le collecteur de courant d'électrode positive (410) et la couche de matériau actif d'électrode positive, la couche de matériau actif d'électrode positive recouvrant une surface de la couche d'épaississement (430) étant une première couche de matériau actif d'électrode positive (420), et la couche de matériau actif d'électrode positive située dans la portion droite (401) et reliée à la première couche de matériau actif d'électrode positive (420) étant une deuxième couche de matériau actif d'électrode positive (440) ; et
un rapport entre une épaisseur de la première couche de matériau actif d'électrode positive (420) et une épaisseur de la deuxième couche de matériau actif d'électrode positive (440) étant de 20-80 %.

2. Feuille d'électrode positive (400) selon la revendication 1, dans laquelle le rapport entre l'épaisseur de la première couche de matériau actif d'électrode positive (420) et l'épaisseur de la deuxième couche de matériau actif d'électrode positive (440) est de 30-60 %, de préférence 45-55 %.

3. Feuille d'électrode positive (400) selon l'une quelconque des revendications 1 et 2, dans laquelle un rapport entre l'épaisseur de la deuxième couche de matériau actif d'électrode positive (440) et une somme de l'épaisseur de la première couche de matériau actif d'électrode positive (420) et de la couche d'épaississement (430) est de 1:(0,9-1,1) ;
ou
dans laquelle le rapport entre l'épaisseur de la deuxième couche de matériau actif d'électrode positive (440) et une somme de l'épaisseur de la première couche de matériau actif d'électrode positive (420) et de la couche d'épaississement (430) est de 1:(0,95-1,05).

4. Feuille d'électrode positive (400) selon l'une quelconque des revendications 1 à 3, dans laquelle la couche de matériau actif d'électrode positive est disposée sur les deux côtés du collecteur de courant d'électrode positive (410) dans la direction de l'épaisseur.

5. Feuille d'électrode positive (400) selon l'une quelconque des revendications 1 à 4, dans laquelle une pluralité de régions à trous (431) sont réparties dans la couche d'épaississement (430), et la région à trous (431) est pourvue en son sein d'un matériau actif d'électrode positive destiné à relier le collecteur de courant d'électrode positive (410) et la première couche de matériau actif d'électrode positive (420), de préférence une surface où la couche d'épaississement (430) est assemblée à la première couche de matériau actif d'électrode positive (420) est une surface d'assemblage (432), et un rapport entre une superficie de la pluralité de régions à trous (431) réparties sur la surface d'assemblage (432) et une superficie de la surface d'assemblage (432) est de 20 % à 50 % ;
et/ou
dans laquelle des trous pénétrant dans la couche d'épaississement (430) sont répartis dans la région à trous (431) de la couche d'épaississement (430), les trous sont remplis du matériau actif d'électrode positive, et les trous ont un diamètre interne de 100-5000 µm.

6. Feuille d'électrode positive (400) selon l'une quelconque des revendications 1 à 5, dans laquelle la couche d'épaississement (430) est constituée d'un matériau isolant ;
et/ou
dans laquelle un matériau de la couche d'épaississement (430) comprend de la résine acrylique et/ou de la résine polyoléfinique ;
la résine acrylique comprend indifféremment un ou plusieurs des composés suivants : copolymère acide acrylique-acide méthacrylique, copolymère acide acrylique-acide buténoïque, copolymère acide acrylique-acide itaconique, copolymère acide acrylique-acide maléique, copolymère acide acrylique-méthacrylate de méthyle, copolymère acide acrylique-méthacrylate d'éthyle, copolymère acide acrylique-méthacrylate de n-butyle, et copolymère acide acrylique-méthacrylate d'isobutyle ; et
la résine polyoléfinique comprend indifféremment un ou plusieurs des composés suivants :
polypropylène, polyéthylène, caoutchouc de polybutadiène, copolymère éthylène-acétate de propylène, copolymère éthylène-propylène, copolymère éthylène-acétate de vinyle, polyoléfine modifiée à l'anhydride maléique, poly(butadiène-acrylonitrile), et copolymère styrène-anhydride maléique ;
et/ou
dans laquelle la couche d'épaississement (430) est assemblée séparément au collecteur de courant d'électrode positive (410) et à la première couche de matériau actif d'électrode positive (420).

7. Ensemble d'électrodes (500), comprenant : une feuille d'électrode négative (600) et la feuille d'électrode positive (400) selon l'une quelconque des revendications 1 à 6, la feuille d'électrode positive (400) et la feuille d'électrode négative (600) étant enroulées ou pliées pour former des régions cintrées (502) et une région droite (501), et la région droite (501) étant reliée aux régions cintrées (502) ; et
les portions à cintrer (402) étant enroulées ou pliées pour former des portions cintrées, les portions cintrées étant situées dans les régions cintrées (502), et une portion droite (401) étant située dans la région droite (501).

8. Ensemble d'électrodes (500) selon la revendication 7, dans lequel la feuille d'électrode positive (400) et la feuille d'électrode négative (600) sont enroulées pour former une structure enroulée, le collecteur de courant d'électrode positive (410) de la portion cintrée comporte un côté interne et un côté externe, et la couche d'épaississement (430) est disposée sur le côté interne du collecteur de courant d'électrode positive (410) d'au moins une partie des portions cintrées ;
ou
dans lequel la feuille d'électrode positive (400) et la feuille d'électrode négative (600) sont pliées pour former une structure stratifiée, la feuille d'électrode positive (400) comporte une cinquième portion cintrée qui recouvre la feuille d'électrode négative (600), et la couche d'épaississement (430) est disposée sur au moins un côté du collecteur de courant d'électrode positive (410) de la cinquième portion cintrée dans la direction de l'épaisseur,
de préférence
dans lequel le collecteur de courant d'électrode positive (410) de la cinquième portion cintrée est pourvu d'un côté interne et d'un côté externe, et la couche d'épaississement (430) est disposée sur le côté interne du collecteur de courant d'électrode positive (410) de la cinquième portion cintrée.

9. Ensemble d'électrodes (500) selon la revendication 7, dans lequel la feuille d'électrode positive (400) et la feuille d'électrode négative (600) sont enroulées pour former une structure enroulée, la feuille d'électrode positive (400) comporte une première portion cintrée (451) sur un côté le plus à l'intérieur, et la couche d'épaississement (430) est disposée sur au moins un côté du collecteur de courant d'électrode positive (410) de la première portion cintrée (451) dans la direction de l'épaisseur.

10. Ensemble d'électrodes (500) selon la revendication 9, dans lequel le collecteur de courant d'électrode positive (410) de la première portion cintrée (451) est pourvu d'un côté interne et d'un côté externe, et la couche d'épaississement (430) est disposée sur le côté interne du collecteur de courant d'électrode positive (410) de la première portion cintrée (451).

11. Ensemble d'électrodes (500) selon la revendication 9 ou 10 dans lequel, dans une direction d'enroulement, la feuille d'électrode positive (400) comporte une deuxième portion cintrée (452) adjacente à la première portion cintrée (451), et la couche d'épaississement (430) est disposée sur au moins un côté du collecteur de courant d'électrode positive (410) de la deuxième portion cintrée (452) dans la direction de l'épaisseur.

12. Ensemble d'électrodes (500) selon la revendication 11, dans lequel le collecteur de courant d'électrode positive (410) de la deuxième portion cintrée (452) est pourvu d'un côté interne et d'un côté externe, et la couche d'épaississement (430) est disposée sur le côté interne du collecteur de courant d'électrode positive (410) de la deuxième portion cintrée (452).

13. Ensemble d'électrodes (500) selon la revendication 11 ou 12 dans lequel, dans la direction d'enroulement, la feuille d'électrode positive (400) comporte une troisième portion cintrée (453) adjacente à la deuxième portion cintrée (452), et la couche d'épaississement (430) est disposée sur au moins un côté du collecteur de courant d'électrode positive (410) de la troisième portion cintrée (453) dans la direction de l'épaisseur.

14. Ensemble d'électrodes (500) selon la revendication 13, dans lequel le collecteur de courant d'électrode positive (410) de la troisième portion cintrée (453) est pourvu d'un côté interne et d'un côté externe, et la couche d'épaississement (430) est disposée sur le côté interne du collecteur de courant d'électrode positive (410) de la troisième portion cintrée (453) ;
et/ou
dans lequel, dans la direction d'enroulement, la feuille d'électrode positive (400) comporte une quatrième portion cintrée (454) adjacente à la troisième portion cintrée (453), et la couche d'épaississement (430) est disposée sur au moins un côté du collecteur de courant d'électrode positive (410) de la quatrième portion cintrée (454) dans la direction de l'épaisseur,
de préférence
dans lequel le collecteur de courant d'électrode positive (410) de la quatrième portion cintrée (454) est pourvu d'un côté interne et d'un côté externe, et la couche d'épaississement (430) est disposée sur le côté interne du collecteur de courant d'électrode positive (410) de la quatrième portion cintrée (454).

15. Cellule de batterie (20), comprenant l'ensemble d'électrodes (500) selon l'une quelconque des revendications 7 à 14.
